(19) Europäisches Patentamt
European Patent Office
Office européen des brevets

(11) EP 4 481 837 A1

(12) EUROPEAN PATENT APPLICATION

(43) Date of publication:
**25.12.2024 Bulletin 2024/52**

(21) Application number: **23180638.1**

(22) Date of filing: **21.06.2023**

(51) International Patent Classification (IPC):
***H01M 4/00*** *(2006.01)*

(52) Cooperative Patent Classification (CPC):
**H01M 4/00;** H01M 2300/0085

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ligna Energy AB**
**602 40 Norrköping (SE)**

(72) Inventors:
- **AIL, Uiwala**
  **58431 Linköping (SE)**
- **BACKE, Jakob**
  **58272 Linköping (SE)**
- **HÄGERSTRÖM, Anders**
  **58246 Linköping (SE)**
- **CRISPIN, Xavier**
  **61771 Kimstad (SE)**

(74) Representative: **AWA Sweden AB**
**Box 45086**
**104 30 Stockholm (SE)**

# (54) ZINC SALT HYDROGEL

(57) The present invention relates to a method for manufacturing a hydrogel. The method comprises the steps of providing an agarose and providing an aqueous solution of a salt comprising $Zn^{2+}$, wherein the salt is selected from zinc methanesulfonate, zinc acetate, zinc chloride, or a combination thereof. The method further comprises combining the agarose and the aqueous solution to form a mixture and forming a hydrogel from said mixture. The present invention also relates to a hydrogel, an electrolyte comprising the hydrogel, and an energy storage device comprising the electrolyte.

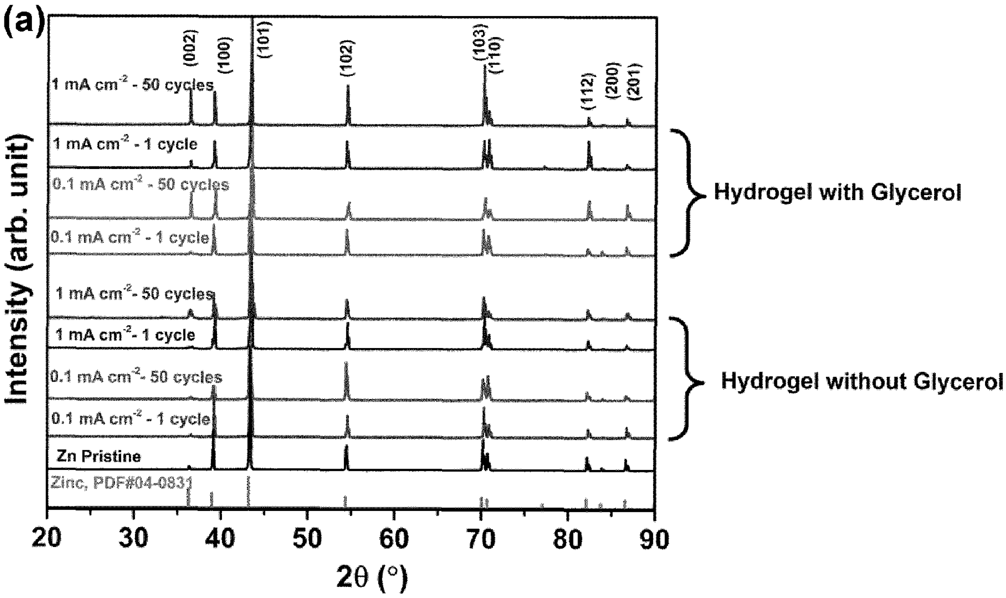


Fig. 3a

EP 4 481 837 A1

## Description

### Technical field

The present invention relates to a method for manufacturing a hydrogel, a hydrogel as such, an electrolyte comprising said hydrogel, and an electrochemical storage device comprising said electrolyte.

### Background

Electrochemical energy storage (EES) devices, such as batteries, supercapacitors and pseudocapacitors, have shown a wide variety of applications ranging from household electronics and electrical vehicles. Lithium ion-based batteries (LIBs) are one of the most commonly used EES devices.

However, due to the extensive demand, the price of lithium is growing exponentially which has pushed worldwide researchers to find out alternative battery solutions having similar electrochemical potential and chemical properties. Electrolyte solutions play a key role in EES devices and significantly impact capacity, cyclic stability, self-discharge, cost and safety. Although organic electrolyte based batteries displays high operating potential and specific energy, it exists substantial concerns related to their flammability, toxicity, and cost.

Zinc-ion batteries (ZIB) are one such major alternative in terms of both performance and manufacturing compatibility to compete alongside lithium-ion battery (LIB). Additionally, zinc-ion batteries use raw materials that are orders of magnitude more abundant in a standard LIB [Sustainable Energy Fuels, 2020, 4, 3363-3369]. Contrary to the flammable electrolytes used in lithium-ion battery, zinc-ion technology uses water-based chemistry and hence are safer. This is the key feature that makes zinc-ion batteries especially attractive for residential and commercial energy storage. To further increase the operational safety of zinc-ion batteries, the use of gel or solid-state electrolytes could be advantageous, because it prevents the electrolyte from leaking out if the cell is damaged. Agarose gels are used in hydrogel electrolytes for zinc batteries for research purpose, but the use is limited by an impractical manufacturing method. In has been difficult to induce gelation of agarose in the presence of the concentrated zinc salts commonly used in battery applications, such as zinc sulphate. Agarose gels are commonly prepared from water in the absence of zinc salt, followed by subsequent immersion in the zinc salt solution to allow diffusion of salt into the gel. Using this method, it has been difficult to achieve hydrogels having sufficient concentrations of zinc-ions required for electrolyte purposes.

Furthermore, it has become clear that any alternative to lithium-ion batteries needs to adopt standard manufacturing processes to allow for a rapid and low-cost scale-up.

Therefore, there is a need for improved hydrogels, manufacturing methods thereof, and electrochemical storage devices.

### Summary

An objective of the present invention is to provide a method for manufacturing a hydrogel which at least partly alleviates the above mentioned drawbacks. This and other objects, that will become apparent in the following are accomplished by a method for manufacturing a hydrogel, a hydrogel, an electrolyte, and an electrochemical device as described in accordance with the aspects and embodiments herein.

In one aspect, there is provided a method comprising the steps of providing an agarose and providing an aqueous solution of a salt comprising $Zn^{2+}$, wherein the salt is selected from zinc methanesulfonate, zinc acetate, zinc chloride, or a combination thereof. The method further comprises combining the agarose and the aqueous solution to form a mixture and forming a hydrogel from said mixture.

The inventors have surprisingly found that gelation of agarose can be achieved in an aqueous solution of a zinc salt, provided that the zinc salt is selected from the list consisting of selected from zinc methanesulfonate, zinc acetate, zinc chloride, or a combination thereof. Consequently, the present invention relates to a one-pot method for forming a hydrogel of agarose directly in the presence of zinc ions.

In one aspect, there is provided a hydrogel comprising agarose in the range of 1 % to 6% by weight of the hydrogel. The hydrogel further comprises a salt comprising $Zn^{2+}$, wherein the concentration of $Zn^{2+}$ in the hydrogel is in the range of 0.1 to 5M. The salt is selected from zinc methanesulfonate, zinc acetate, zinc chloride, or a combination thereof.

The inventive concept relates to a hydrogel comprising relatively high concentration of zinc ions. The hydrogel has been found to exhibit electrochemical properties making it suitable for use in energy storage applications. Furthermore, it has been found that the hydrogel exhibits mechanical properties that allows it to be suitable for use as an electrolyte in energy storage applications. Owing to its stability, the hydrogel can furthermore be handled in standardized manufacturing procedures commonly used in energy storage manufacturing.

In one aspect, there is provided an electrolyte for use in an electrochemical storage device, wherein the electrolyte comprises the hydrogel as described herein.

The inventors have found that the hydrogel is especially suitable as an electrolyte in electrochemical energy storage applications, such as battery applications. The water-based chemistry of the hydrogel allows for an electrolyte which is non-flammable or at least may be considered to have low flammability. The hydrogel may further be considered relatively cost-efficient as, e.g., Zn is a relatively abundant resource.

In one aspect, there is provided an electrochemical storage device comprising a positive electrode, a negative electrode, and an electrolyte as described herein disposed between the positive electrode and the negative electrode.

The inventor has found that an electrochemical storage device comprising the electrolyte as described herein provides a cost-effective EES device having low flammability.

A further scope of applicability of the present disclosure will become apparent from the detailed description given below. However, it should be understood that the detailed description and specific examples, while indicating preferred embodiments of the disclosure, are given by way of illustration only, since various changes and modifications within the scope of the disclosure will become apparent to those skilled in the art from this detailed description.

Hence, it is to be understood that this disclosure is not limited to the particular component parts of the device described or steps of the methods described as such device and method may vary. It is also to be understood that the terminology used herein is for purpose of describing particular embodiments only and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

## Brief description of the drawings

Figure 1a depicts the ionic conductivity and activation energy for various inventive hydrogels.

Figure 1b is the typical Arrhenius plot for ionic conductivity.

Figure 2a shows the electrochemical stability window for hydrogels with or without glycerol modification.

Figure 2b depicts a zoomed in version of Figure 2a (with current in logarithmic scale).

Figure 3a and b show the X-ray diffraction (XRD) patterns and SEMs, respectively, of Zn electrodes after 1 cycle and 50 cycles at 0.1 mA $cm^{-2}$ and 1 mA $cm^{-2}$.

Figure 3c and 3d show the pristine Zn surface and the surface morphology after 50 cycles of deposition and dissolution at current density of 1 mA $cm^{-2}$ in presence of hydrogel that does not contain glycerol.

Figure 3e and f shows the Zn electrode surface after 1 and 50 cycles of depositions/dissolution at current density of 1 mA $cm^{-2}$ in presence of hydrogel with glycerol.

Figure 4 depicts a collection of Cyclic Voltammograms for symmetrical Zn/Zn cells.

Figure 5a depicts galvanostatic cycling of Zn deposition and dissolution at different current densities measured in a Zn/Zn symmetric cell containing different compositions of the agarose hydrogel.

Figure 5b depicts galvanostatic cycling of Zn deposition and dissolution at 0.25 mA $cm^{-2}$ current density measured in a Zn/Zn symmetric cell for 1125 cycles with 30 min of deposition and dissolution in each cycle.

Figure 6a shows Zn deposition and dissolution studies in the at different current densities measured in a Zn/Zn symmetric cell using the agarose hydrogel electrolyte wherein Zn electrode was prepared in a via slurry coating of the Zn/activated carbon and in b the dry pressing of the Zn/activated carbon

Figures 7a and b Zn deposition and dissolution studies at 10 mA/$cm^2$ in a Zn/Zn symmetric cell using dry pressed Zn electrodes and a Whatman glass fiber separator in an electrolyte comprising 1 M zinc mesylate, where 7b is a zoomed in version of 7a.

Figure 8a shows the CV curve of a zinc-ion capacitor with Zn foil (negative electrode), activated carbon (positive electrode) and 3% agarose hydrogel (with 25% water replaced by glycerol) containing 1 M $Zn^{2+}$ and 1 M $Na^+$.

Figure 8b shows the peak current versus scan rate graph for both oxidation and reduction process, corresponding to the CV of Figure 6a.

Figures 9a and b show the galvanostatic charge-discharge (GCD) plot of the zinc ion pseudocapacitor at different charge/discharge rates with discharge capacity represented in mass normalized and area normalized values respectively.

Figures 10a and b show the Ragone plot of the zinc ion pseudocapacitor represented in mass normalized and area normalized values respectively.

Figures 11a and b show the leakage and the self-discharge plots respectively for a zinc ion pseudocapacitor charged to 1.5 V and 1.2 V.

Figures 12a and b show Coulombic and energy efficiency during the long term galvanostatic cycling (22000 cycles) of the zinc ion pseudocapacitor at a charge/discharge rate of 5 mA/$cm^2$ (1.05 A/g), and the corresponding capacity

retention and discharge capacity. The electrolyte used in this device is the buffered electrolyte containing 3% agarose hydrogel (with 25% water replaced by glycerol) containing 1 M $Zn^{2+}$.

Figure 13 shows temperature studies of a Zinc ion pseudocapacitor.

Figure 14a shows the cyclic voltammogram for a Zn lignin battery with Zn foil (negative electrode), catechol modified Kraft Lignin/carbon composite (positive electrode). The electrolyte used in this device is the buffered electrolyte containing 3% agarose hydrogel (with 25% water replaced by glycerol) containing 1 M $Zn^{2+}$.

Figure 14b shows the peak current versus scan rate graph for both oxidation and reduction process, corresponding to the CV of Figure 14a.

Figure 14c shows the galvanostatic charge-discharge (GCD) plot of the zinc lignin battery at different charge/-discharge rates.

Figure 14d shows Ragone plots for a Zn lignin battery.

Figures 14e shows the self-discharge of the device.

Figure 14f shows the leakage current of the Zn lignin battery in the hydrogel electrolyte.

Figure 14g shows the galvanostatic cycling of the Zn lignin battery at a charge/discharge rate of 1 A $g^{-1}$ showing the discharge capacity and the corresponding capacity retention.

Figure 14h shows the Coulombic efficiency and energy efficiency of the device with cycling the Zn lignin battery at a charge/discharge rate of 1 A $g^{-1}$.

Figure 14i shows temperature studies of a Zn lignin battery.

Figure 15 shows quantitative $^{31}P$ NMR spectra and signal assignment of Pristine and modified lignin derivative.

## Detailed description

The present disclosure relates to new and enhanced methods for producing a hydrogel, hydrogels as such, electrolytes comprising hydrogels, and electrochemical energy storage devices.

In one aspect, there is provided a method comprising the steps of providing an agarose and providing an aqueous solution of a salt comprising $Zn^{2+}$, wherein the salt is selected from zinc methanesulfonate, zinc acetate, zinc chloride, or a combination thereof. The method further comprises combining the agarose and the aqueous solution to form a mixture and forming a hydrogel from said mixture.

The present invention is based on the realization that a hydrogel can be formed by a method which involves combining agarose and an aqueous solution comprising salt to form a mixture. The combining of agarose and an aqueous solution comprising salt to form a mixture may be performed at room temperature. After the agarose and the aqueous solution have mixed, a hydrogel is formed from said mixture. Typically, the hydrogel is formed by heating the mixture to a predetermined temperature above room temperature and subsequently allowing the hydrogel to cool to room temperature, thereby forming a hydrogel. Expressed differently, the hydrogel can advantageously be produced in relatively concentrated aqueous solutions of zinc salt. The zinc salt may be a salt suitable for electrochemical energy storage device applications. Producing the hydrogel by combining agarose and the aqueous solution advantageously allows for time-efficient method. In other words, this advantageously allows for avoiding the strenuous and time-costly separate immersion steps used in the state of the art.

Today, agarose hydrogels comprising a zinc salt are prepared by a first step of producing the hydrogel (by heating and subsequently cooling a mixture of agarose and an aqueous solution, which aqueous solution is devoid from zinc salt), followed by an immersion step during which the formed hydrogel is immersed in concentrated zinc salt solution to allow for the diffusion of zinc salt into the hydrogel. In the state of the art, it has proven difficult induce gelation of agarose and other gelling agents in aqueous solutions comprising salts commonly used for electrolyte purposes in zinc-ion battery applications. Examples of such salts are a multitude of zinc salts that are suitable for battery chemistry, such as zinc sulphate.

It is understood that zinc commonly is abbreviated Zn.

The inventors have surprisingly found that the selected salts allow for a method that successfully induces gelling of agarose in the presence of zinc ions, especially in relatively high concentrations. Consequently, the present invention provides a method for producing hydrogels suitable for use as electrolyte materials in electrochemical energy storage applications.

The formed hydrogel may be understood as chemically and physically crosslinked agarose containing an aqueous solution comprising a zinc salt. Expressed differently, the hydrogel may be understood as a porous framework comprising a plurality of channels. The hydrogel may be understood as a biphasic material comprising a solid phase (crosslinked agarose) and a liquid phase (aqueous solution comprising salt). Preferably, the liquid phase makes up for at least 10 %, by weight of the total weight of the hydrogel. Additionally, or alternatively, the liquid phase makes up for at least 10 %, by volume, of the total volume of the hydrogel.

The formed hydrogel may for example be cast on a substrate, such as a plastic substrate.

The manufactured hydrogel is especially suitable as electrolyte in battery applications comprising zinc-based

anodes.

Herein, the term "electrolyte" refers to an ion-containing medium. The electrolyte is electrically conducting through the movement of ions. The electrolyte does not conduct electrons to any large extent. It is known that electrolytes may be solid, liquid or a combination thereof. Electrolytes are used in electrochemical energy storage and the concept as such is known to the person skilled in the art.

Agarose is a heteropolysaccharide, generally extracted from certain red seaweed. It is a linear polymer made up of the repeating unit of agarobiose, which is a disaccharide made up of D-galactose and 3,6-anhydro-L-galactopyranose. Agarose is a linear polymer with a molecular weight of about 120,000, consisting of alternating D-galactose and 3,6-anhydro-L-galactopyranose linked by $\alpha$-(1$\rightarrow$3) and $\beta$-(1$\rightarrow$4) glycosidic bonds.

Typically, agarose has a gelling temperature in the range of 32-52 °C. The gelling temperature may vary with, e.g., synthetical modifications or natural origin. For example, the gelling temperature may vary with the degree of substitution of the agarose and the starting material the agarose is derived from. Agarose is known to the person skilled in the art. The term "gelling temperature" is defined as the temperature above which the agarose is soluble in water, and below which the agarose undergoes phase transition to increase in viscosity and form a gel.

Zinc methanesulfonate has proven to be particularly advantageous as it allows for the formation of a hydrogel from agarose in an aqueous solution with relatively high concentrations of $Zn^{2+}$, such as of at least 0.5 M, or at least 0.6 M, or at least 0.7 M or at least 0.8M, or at least 0.9 M or at least 1M, or at least 1.1M, or at least 1.2M, or at least 1.3M, or at least 1.4M, or at least 1.5M, or at least 1.7M. It has furthermore proven that the obtained hydrogel possesses advantageous electrochemical properties, making it suitable for use in energy storage applications.

It is understood that zinc methanesulfonate is also known as zinc mesylate.

In some embodiments, the concentration of agarose in the hydrogel is in the range of 1% to 6% by weight of the hydrogel, such as 2% to 5% by weight of the hydrogel, such as 2.5% to 4% by weight of the hydrogel, such as approximately 3% by weight of the hydrogel. It is understood the weight of the hydrogel is to be construed as the combined weight of the solid and liquid phase inherently present in a hydrogel. The specific concentration of agarose allows for a hydrogel having preferred properties, such as ion conducting properties, i.e., properties allowing for desired migration of ions in and out of the hydrogel. The concentration of agarose significantly affects the apparent density, commonly referred to as bulk density, of the gel.

In some embodiments, the concentration of $Zn^{2+}$ in the hydrogel is in the range of 0.1 to 5M, such as in the range of 0.25 to 5M, such as in the range of 0.25 to 4.5M, such as in the range of 0.25 to 4M, such as in the range of 0.25 to 2M, such as in the range of 0.5 to 2M, such as in the range of 0.8 to 1.7M. It is understood that a concentration of $Zn^{2+}$ in the hydrogel refers to the concentration of $Zn^{2+}$ in the solid and the liquid phase combined, even though it may be contemplated that the vast majority of the zinc-ions are present in the liquid phase of the hydrogel. The specific concentrations allow for a hydrogel having especially desirable and tailored electrically conducting properties, manufactured using a relatively naturally abundant zinc material.

In some embodiments, the agarose is provided as a powder. Providing the agarose as a powder has been found to aid in the formation of an especially desirable hydrogel. Further, agarose powder is relatively easy to handle and dose during the manufacturing process. The agarose may be a high electroendosmosis (EEO) agarose with a typical EEO range of 0.23 to 0.27. An agarose with a higher EEO has a higher content of chemically bound charges compared to a low EEO agarose.

In some embodiments, the method further comprises a step of providing a second salt to the mixture, wherein the second salt is selected from the list consisting of lithium methanesulfonate, sodium methanesulfonate, potassium methanesulfonate, magnesium methanesulfonate, quarternary ammonium methanesulfonate, a sodium salt of 2-(N-morpholino)ethanesulfonic acid (MES), a potassium salt of 2-(N-morpholino)ethanesulfonic acid, and a zinc salt of poly(2-acrylamido-2-methyl-1-propanesulfonic acid (PAMPSA).

In some embodiments, the second salt is sodium methanesulfonate or potassium methanesulfonate. Providing a second salt allows for the formation of a hydrogel comprising at least two salts. The addition of a second salt may be advantageous on that the second salt also can provide ionic conductivity to the hydrogel. The specific second salts have advantageously been found to have a high solubility, e.g., when combined with the Zn salts described above. The second salt is added to the mixture and thus allows for a time-efficient one step process as the hydrogel is formed in the aqueous solution comprising at least two salts. In some embodiments, the second salt is sodium methanesulfonate, potassium methanesulfonate, a potassium salt of 2-(N-morpholino)ethanesulfonic acid or a sodium salt of 2-(N-morpholino) ethanesulfonic acid. It has been found that 2-(N-morpholino)ethanesulfonic acid salt may function as a pH buffer. It has been found that salt of zinc poly(2-acrylamido-2-methyl-1-propanesulfonic acid) additionally may function as a mechanical stabilizer.

In some embodiments, the method further comprises a step of providing an additive to the mixture, such as an additive selected from glycerol, a pH buffer, a freezing agent, and a mechanical stabilizer. This advantageously allows for tailoring the properties of the formed hydrogel.

In some embodiments, the method further comprises a step of providing glycerol to the mixture. In some

embodiments, the glycerol is provided to form a mixture having a glycerol concentration of 5-50 % by weight of the mixture, such as 15-40 % by weight of the mixture, such as 20-30 % by weight of the mixture.

Glycerol has been found to reduce the water content of the hydrogel while not impairing the gel forming properties of the ingoing reactants, e.g., the agarose and aqueous solution. It has been found that a high ion conductivity of the hydrogel can be maintained also with the addition of glycerol. The glycerol content of the electrolyte is advantageous as it can reduce side reactions, such as water splitting reactions, in the electrolyte when, e.g., used in a battery. The glycerol further advantageously acts as a plasticizer which improves the mechanical properties of the gel. Additionally, the glycerol has been found to reduce dendrite formation and consequently improve the cycling stability when the formed electrolyte is provided in a battery comprising at least one Zn-based electrode. Dendrite formation in, e.g., a battery may lead to the dendrites piercing the separator. In other words, dendrite formation may short-circuit the battery (catastrophic failure of the battery). Glycerol is also advantageous in that it can reduce the freezing point of the hydrogel.

A freezing agent, also referred to antifreeze agent or cryoprotective agent, is an additive added to reduce the freezing point of the hydrogel, protect against unfavorable effects of ice formation, and thus allow for, e.g., the hydrogel to function at lower temperatures. The freezing agent may be ethylene glycol. For example, the freezing agent may be present in the hydrogel at a concentration of 3-7 % by weight of the hydrogel, such as approximately 5 % by weight of the hydrogel.

A mechanical stabilizer is an additive improving the durability through chemical and/or physical interactions. For example, the mechanical stabilizer may be a means for forming an additional double/interpenetrating 3D network structures or a nanoparticle or nanofiber reinforcing the gel matrix.

In some embodiments, the mechanical stabilizers are selected from the group consisting of polyvinyl alcohol, cellulose, sulphonated cellulose, polyacrylic acid (PVA), poly(acrylic acid and 2-acrylamido-2-methylpropane sulfonic acid) (co-poly(AA-AMPSA), poly(2-acrylamido-2-methylpropane sulfonic acid) (PAMPSA), and colloidal silica. Said mechanical stabilizer have proven especially suitable to incorporate in the hydrogel. In some embodiments, the mechanical stabilizers constitute about 2-7 wt% of the hydrogel. In some embodiments, mechanical stabilizer is poly(2-acrylamido-2-methylpropane sulfonic acid), or cellulose ethyl sulfonate (CES). PAMPSA and CES may be considered poly electrolytes. PAMPSA and CES have been found particularly advantageous as they improve both the ionic conductivity and the mechanical stability of the hydrogel.

A pH buffer, such as MES is an additive which prevents large variations in pH levels. The general concept of pH buffers is known to the person skilled in the art.

In some embodiments, the hydrogel has a pH in the range of 3 to 8, such as in the range of 4 to 7. In some embodiments, the hydrogel comprises a pH buffer, such as an alkali 2-(N-morpholino)ethanesulfonic acid salt (MES). The pH buffer may be added to adjust the pH of the hydrogel. For example, the inventor has found that alkali 2-(N-morpholino) ethanesulfonic acid salt may be used as a co-electrolyte and a buffer to adjust pH of a hydrogel, e.g., from 5.5 to 6.2. MES exhibit no or very weak coordination properties, which allows for a hydrogel with a high zinc concentration. Moreover, the protons that may be released into the electrolyte during charging, for example when redox active species in the electrode material are oxidized, are buffered by the MES. MES is then added to the hydrogel with a concentration ranging between 25% to 50% of the concentration of the zinc salt. The pH may be adjusted to target pH using methanesulfonic acid. The addition of MES to the hydrogel is believed to stabilize pH of the hydrogel. Thus, when the hydrogel is provided as an electrolyte, side reactions during charging and discharging are reduced and the life-time of the battery is increased.

In some embodiments, the step of forming a hydrogel further comprises a step of heating the mixture to a predetermined temperature, and a step of allowing the mixture to cool, thereby forming the hydrogel. This allows for the agarose to melt/dissolve during the step of heating. During the step of allowing the mixture to cool the agarose eventually reaches the gelling temperature and thus starts to gel and form a 3D network of chemically crosslinked and physically intertwined agarose fibers.

In some embodiments, the predetermined temperature is in the range of 40-100 °C, such as in the range of 50-90 °C, such as in the range of 60-80 °C. This temperature allows for the agarose to melt/dissolve in the mixture and gel during cooling.

After the step of heating, the formed hydrogel may be kept at room temperature for, e.g., 2-3h, making it easier to be cut into smaller portions.

In one aspect, there is provided a hydrogel comprising agarose in the range of 1% to 6% by weight of the hydrogel. The hydrogel further comprises a salt comprising $Zn^{2+}$, wherein the concentration of $Zn^{2+}$ in the hydrogel is in the range of 0.1 to 2.5M. The salt is selected from zinc methanesulfonate, zinc acetate, zinc chloride, or a combination thereof.

Effects and features of this aspect are largely analogous to those described above in connection with the previously discussed aspect. Embodiments mentioned in relation to said previous aspect are largely compatible with the presently discussed aspect. It is further noted that the inventive concepts relate to all possible combinations of features unless explicitly stated otherwise.

The hydrogel has proven useful in a plurality of applications such as an electrolyte in electrochemical energy storage devices, and in particular as electrolyte in solid-state battery applications.

In some embodiments, the hydrogel comprises agarose in the range of 2% to 5% by weight of the hydrogel, such as 2.5% to 4% by weight of the hydrogel, such as approximately 3% by weight of the hydrogel.

In some embodiments, the concentration of $Zn^{2+}$ in the hydrogel is in the range of 0.25 to 2M, such as in the range of 0.5 to 2M, such as in the range of 0.8 to 1.7M.

In some embodiments, the hydrogel further comprises a second salt selected from the list consisting of lithium methanesulfonate, sodium methanesulfonate, potassium methanesulfonate, magnesium methanesulfonate, quarternary ammonium methanesulfonate, a sodium salt of 2-(N-morpholino)ethanesulfonic acid (MES), a potassium salt of 2-(N-morpholino)ethanesulfonic acid, and a zinc salt of poly(2-acrylamido-2-methyl-1-propanesulfonic acid (PAMPSA). The second salt allows for further tailored properties of the hydrogel, such as ionic conductivity. The ionic conductivity may thus advantageously arise from a selected combination of the salt comprising $Zn^{2+}$ and the second salt. The second salt may be considered a co-electrolyte. In some embodiments, the second salt is at least one of sodium methanesulfonate, potassium methanesulfonate, and a potassium salt of 2-(N-morpholino)ethanesulfonic acid and a sodium salt of 2-(N-morpholino) ethanesulfonic acid.

In some embodiments, the hydrogel further comprises an additive selected from the group consisting of a glycerol, a pH buffer, a freezing agent, and a mechanical stabilizer.

In some embodiments, the hydrogel has a pH in the range of 3 to 8, such as in the range of 4 to 7.

In some embodiments, the hydrogel is obtainable from a method as described herein.

In one aspect, there is provided an electrolyte for use in an electrochemical storage device, wherein the electrolyte comprises the hydrogel as described herein. The inventor has found that the hydrogel is especially suitable as an electrolyte in electrochemical energy storage applications, such as battery applications. The water-based chemistry of the hydrogel allows for an electrolyte which is non-flammable or at least may be considered to have low flammability. The hydrogel may further be considered relatively cost-efficient as, e.g., Zn is a relatively abundant resource.

In one aspect, there is provided an electrochemical storage device comprising a positive electrode, a negative electrode, and an electrolyte as described herein disposed between the positive electrode and the negative electrode.

Herein, the term "electrochemical energy storage device" includes batteries, supercapacitors, pseudocapacitors, zinc ion pseudocapacitors and hybrid batteries having one supercapacitor electrode.

In some embodiments, the negative electrode comprises Zn. A negative electrode comprising Zn has proven especially suitable in combination with an electrolyte comprising the hydrogel described herein. An EES device comprising the hydrogel as described herein and a negative electrode comprising zinc has proven to have a relatively low dendrite formation. Consequently, said EES device has a good cycling stability and a relatively small risk for catastrophic failure as a result of dendrite formation.

The negative electrode may for example be manufactured using dry pressing by, i.e., pressing a mixture comprising, e.g., zinc powder, carbon black or activated carbon, and polytetrafluoroethylene or a polyolefin. Other examples of the negative electrode comprising zinc are zinc foil, zinc foam, plated zinc or zinc slurry coated conductive metal foils.

In some embodiments of the electrochemical storage device, the negative electrode further comprises a mixture of Zn particles and a particular source of carbon selected from the group consisting of activated carbon, carbon black, graphite, carbon nanotubes, exfoliated graphite (2D graphite), and carbon felt. The mixture of Zn particles and a particular source of carbon allow for improved electrical conductivity of the negative electrode and thus an improved electrochemical storage device. The particular source of carbon may further provide mechanical stability.

Activated carbon, carbon black, graphite, carbon nanotubes, exfoliated graphite (2D graphite), and carbon felt as such are known to the person skilled in the art.

In some embodiments, the negative electrode further comprises lignin. The lignin may be coated on the zinc surface.

In some embodiments of the electrochemical storage device, the negative electrode further comprises a binder, such as a polytetrafluoroethylene or a polyolefin, such as a polyethylene. The binder provides mechanical stabilization to the negative electrode and ensures that the components of the negative electrode do not crumble or disassemble before, after, or during operation of the electrochemical energy storage.

Polytetrafluoroethylene and polyolefins are known to the person skilled in the art.

In some embodiments of the electrochemical storage device, the positive electrode further comprises a second particular source of carbon selected from the group consisting of activated carbon, carbon black, graphite, carbon nanotubes, exfoliated graphite (2D graphite), and carbon felt. A second particular source of carbon allows for further tailored properties of the electrode. The properties may for example be electrical conductivity and/or mechanical properties.

In some embodiments of the electrochemical storage device, the positive electrode further comprises a modified lignin. This provides an energy storage device having a good energy density, power, cyclability and corrosion resistance. In addition, this allows for an environmentally friendly electrochemical storage device.

In some embodiments, the electrochemical storage device is a Zinc ion pseudocapacitor.

In one aspect, there is provided an electrode material for use in an electrochemical storage device, comprising a modified lignin being a lignin functionalized with at least one aromatic moiety selected from the list of catechol, hydroquinone, and phenols substituted with an alkoxy group, wherein a total content of phenolic hydroxyl groups in the modified lignin is at least 4.0 mmol/g, such as at least 4.1 mmol/g, such as at least 4.15 mmol/g, such as at least 4.2 mmol/g, such as at least 4.25 mmol/g, such as at least 4.3 mmol/g, such as at least 4.35 mmol/g, such as at least 4.4 mmol/g, such as at least 4.45 mmol/g, such as at least 4.5 mmol/g, such as at least 4.55 mmol/g, such as at least 4.6 mmol/g, such as at least 4.65 mmol/g, such as at least 4.7 mmol/g, such as at least 4.75 mmol/g, such as at least 4.8 mmol/g, such as at least 4.85 mmol/g, such as at least 4.9 mmol/g, such as at least 4.95 mmol/g, such as at least 5.0 mmol/g, such as at least 5.05 mmol/g, such as at least 5.1 mmol/g, as determined by $^{31}P$ Nuclear Magnetic Resonance Spectroscopy.

The inventive electrode material has proven to be a highly promising electrode material in a plurality of different applications, such as electrochemical energy storage devise applications in general and battery applications in particular. The present inventive concept provides an environmentally friendly electrode material which has relatively high redox activity. Furthermore, the electrode material has a relatively low solubility which is useful in for example batteries with liquid or gel electrolytes. Thus, the electrode material having a low solubility in, e.g., aqueous electrolytes advantageously allow for a stable electrode material allowing for a long-lasting battery. The electrode material may be manufactured using naturally abundant resources such as lignin. The lignin comprised in the electrode material is modified in such a way that the content and accessibility of redox active species increased. The electrode material has been found to exhibit a promising charge density.

Herein, the term "electrode material" refers to a material which may be a conductive material arranged on a current collector to form an electrode and participate in a redox reaction during operation of for example a battery. The electrode material may for example be coated on a current collector.

In the state of the art, it has proven difficult to incorporate lignin in electrode materials. The lignin electrodes of the state of the art have proven to possess poor electrical conductivity, low redox activity and poor stability in for example acidic conditions.

Lignin is considered a waste product from forest based large scale industries. Unmodified or native lignin is generally not stable in acidic conditions. For example, unmodified lignin, native lignin, and Kraft lignin generally comprises redox active groups such as catechols. However, the inventive electrode material comprising modified lignin is stable in acidic aqueous electrolytes. Without wishing to be bound by any particular theory, the inventors believe that this is due to the modified lignin comprises a reduced number of ether bonds, such as the β-O-4' bonds, compared to, e.g., Kraft lignin, fractioned Kraft lignin, lignosulfonate, hydrolysis lignin, soda lignin, and organosolv lignin. The β-O-4' bonds are prone to hydrolysis in both acidic and basic environments. Further, the β-O-4' have been found unstable during electrochemical cycling in both acidic and neutral pH. The inventors have found that a reduced amount of ether bonds mean less bonds prone to hydrolysation and consequently provides a more stable electrode material.

"A total content of phenolic hydroxyl groups" is to be understood as the total content of phenolic hydroxyl groups present in the modified lignin. In this regard, no distinction is to be made between phenolic hydroxyl groups stemming from one or more steps of the modification process disclosed in another aspect of the invention or phenolic hydroxyl groups present in the lignin in which modifications was made. Expressed differently, the phenolic hydroxyl groups stemming from the synthetic functionalization as well as the phenolic hydroxyl groups naturally present in lignin all count towards the total content of phenolic hydroxyl groups. Expressed differently, lignins such as Kraft lignin and lignosulfonate comprise phenolic hydroxyl groups. However, the modified lignin comprises an increased amount of phenolic hydroxyl groups as compared to its unmodified counterpart.

Phenolic hydroxyl groups may for example be hydroxyl groups comprised in catechol, hydroquinone or phenols substituted with an alkoxy group. It is understood that phenolic hydroxyl groups also refer to hydroxyl groups comprised in the likes of phenol, resorcinol, and trihydroxybenzenes. The term "phenolic hydroxyl groups" is understood by the person skilled in the art and refers to any hydroxyl group bonded to an aromatic moiety, preferably a six-carbon containing aromatic moiety.

For example, in the present disclosure, a phenol is considered to comprise one phenolic hydroxyl group and a catechol is considered to comprise two phenolic hydroxyl groups.

The electrode material of the present disclosure comprises modified lignin which in turn comprises a larger amount of phenolic hydroxyl groups as compared to its unmodified counterpart. Consequently, the electrode material comprises an increased amount of redox active moieties which participate in redox reactions during battery cycling allowing for improved electrochemical properties.

It is contemplated that the lignin can be functionalized with the aromatic moieties through condensation reactions thereby increasing the content of phenolic hydroxyl groups.

Herein, the term "aromatic moiety" is to be understood as a cyclic aromatic hydrocarbon comprising at least one hydroxyl group, such as a monocyclic hydrocarbon comprising a hydroxyl group. The monocyclic aromatic hydrocarbons may for example comprise one or more methyl groups and one or more hydroxyl groups.

Aromatic molecules are cyclic, planar and have 4n+2 $\pi$ electrons, where n is an integer. Aromatic molecules are known to the person skilled in the art.

It is understood that "functionalized with at least one aromatic moiety" refers to a carbon-carbon bond formed between lignin and, e.g., a catechol, hydroquinone, or a phenol substituted with an alkoxy group. Stated differently, "functionalized with at least one aromatic moiety" refers to that the modified lignin comprises a higher content of said aromatic moieties as compared to, e.g., Kraft lignin or lignosulfonate. In particular, the modified lignin functionalized with at least one aromatic moiety selected from the list of catechol, hydroquinone, and phenols substituted with an alkoxy group has a total content of phenolic hydroxyl groups in the modified lignin is at least 4.0 mmol/g, such as at least 4.15 mmol/g, such as at least 4.3 mmol/g, such as at least 4.5 mmol/g. This is advantageous in that it improves the electrochemical properties of the modified lignin.

Herein, the term "catechol", also referred to as 1,2-dihydroxybenzene, is an organic compound known to the person skilled in the art.

Herein, the term "hydroquinone", also referred to as benzene-1,4-diol, is an organic compound known to the person skilled in the art.

Herein, the term "phenol", also referred to as benzenol, is an organic compound comprising a phenyl group bonded to a hydroxy group. Phenol is known to the person skilled in the art.

Herein, the term "phenols substituted with alkoxy group" refers to a phenol wherein at least one hydroxyl group originally present in the phenol has been substituted with an alkoxy group or at least one hydrogen originally comprised in the phenol has been substituted with an alkyl group.

Herein, phenol substituted with an alkoxy group may advantageously refer to 2-methoxyphenol and/or 4-methoxyphenol.

The term "alkoxy group" is an alkyl group which is singularly bonded to oxygen, such as methoxy groups or ethoxy groups. Alkoxy groups are know to the person skilled in the art.

$^{31}P$ Nuclear Magnetic Resonance Spectroscopy is known to the person skilled in the art. The method for determining the total content of phenolic hydroxyl groups is described under the heading "Sample derivatization and NMR characterization" below.

Herein, the term "electrochemical storage device" includes batteries, supercapacitors, pseudocapacitors, and hybrid batteries having one supercapacitor electrode.

In some embodiments, the aromatic moiety is catechol, 2-methoxyphenol and/or 4-methoxyphenol.

2-Methoxyphenol, also referred to as guaiacol, is a naturally occurring phenol that due to its low toxicity and low melting point is a suitable starting material for the modified lignin synthesis. Guaiacol can be prepared in large volumes from lignin using e.g. a pyrolysis reaction. Consequently, a modified lignin being functionalized with guaiacol can hence be classified as an environmentally sustainable electrode material.

4-methoxyphenol, also referred to as mequinol, is known to the person skilled in the art. 4-methoxyphenol is advantageous, e.g., due to its low toxicity.

In some embodiments, the lignin is selected from the group consisting of Kraft lignin, fractioned Kraft lignin, lignosulfonate, hydrolysis lignin, soda lignin, and organosolv lignin.

In some embodiments, the lignin is lignosulfonate. Lignosulfonate has been found to provide particularly improved properties when modified and comprised in the electrode material.

In some embodiments, the lignin is Kraft lignin. Kraft lignin has been found to provide particularly improved properties when modified and comprised in the electrode material.

Kraft lignin may be understood as lignin derived from Kraft pulping (sometimes referred to as the sulfate process). Kraft lignin is known to the person skilled in the art. The Kraft lignin may have been processed using the lignoboost process, i.e., obtained and purified from the black liquor produced in a Kraft pulping process.

Fractioned Kraft lignin may be understood as a lignin fraction with decreased polydispersity compared to the parent Kraft lignin where each fraction exhibits different molecular weight distributions.

Lignosulfonate is a type of lignin which may be considered a byproduct from the production of wood pulp using sulfite pulping.

Hydrolysis lignin is a type of lignin which may be considered a byproduct from pre-treatment processes in cellulosic ethanol plants.

Soda lignin may be understood as the type of lignin derived from soda pulping, where sodium hydroxide is utilized as a cooking chemical.

Organosolv lignin may be understood as the lignin derived from the organosolv pulping technique, where an organic solvent is used to solubilize lignin and hemicellulose.

Herein, the term "electrically conducting carbon material" refers to an electrically conducting carbonaceous material, i.e., materials mainly consisting of carbon. Examples thereof are graphite, graphene, carbon black, and carbon nanotubes.

In some embodiments, each alkyl group of the alkoxy group has a molecular weight of lower than 225 g/mol, such

as lower than 150 g/mol, such as lower than 100 g/mol, such as lower than 50 g/mol as determined by $^{31}P$ Nuclear Magnetic Resonance Spectroscopy. This method for determining the molecular weight of each alkyl group in of the alkoxy group in the modified lignin is described under the heading "Sample derivatization and NMR characterization" below. The specific molecular weights advantageously allow for an electrode material having relatively high charge density.

In some embodiments, each alkyl group of the alkoxy group is a methyl group or an ethyl group. The specific groups have been found particularly suitable, e.g., as they occupy a relatively small space.

In some embodiments, the modified lignin has an aliphatic alcohol content lower than 0.2 mmol/g, such as lower than 0.1 mmol/g, as determined by $^{31}P$ Nuclear Magnetic Resonance Spectroscopy. This method for determining the aliphatic alcohol content of the modified lignin is described under the heading "Sample derivatization and NMR characterization" below. Some ether bonds, such as benzylic ethers, are hydrolyzed during the lignin modification reaction and may then form aliphatic alcohols or more chemically stable carbon-carbon bonds. A low content of aliphatic alcohols is therefore a sign of the formation of a lignin that allows for an electrode material having an improved stability during electrochemical cycling in, e.g., neutral and acidic conditions. Acidic conditions may be construed as aqueous solutions having a relatively low pH, such as a pH of less than seven, such as less than 6, such as less than 5, such as less than 4. Generally, the pH of an electrolyte of an electrochemical cell is in the range of 4-7. It is understood, that during operation of an electrochemical cell the local pH may vary.

In some embodiments, the modified lignin has a water solubility of $<10$ g/L at pH 7. The specific water solubility, i.e., solubility in aqueous electrolytes has proven to be suitable for solid state battery applications.

In some embodiments, the modified lignin is present in a resin. This advantageously allows for an electrode material having an improved mechanical stability and a high reactivity. In some embodiments, the modified lignin and a catechol is crosslinked with a formaldehyde or paraformaldehyde group. The modified lignin crosslinked with formaldehyde or paraformaldehyde phenol resin is redox active and thus partakes in redox reactions of the electrode material during operation. Preferably, an electrode comprising a modified lignin crosslinked with formaldehyde or paraformaldehyde phenol resin has a discharge capacity of at least 40 mAh/g. Preferably, such an electrode further comprises carbon.

It is understood that the modified lignin is crosslinked with a catechol and that the formaldehyde or paraformaldehyde phenol act as a cross-linker via the methylene linker.

The term "methylene linker" may also be referred to as methylene moietes, methylene bridges, or methylene groups. Methylene groups are know to the person skilled in the art. "Crosslinked" may thus be understood as one moiety of the modified lignin and one moiety of the catechol being bonded to the same carbon of a methylene group.

Herein, the term "resin" refers to a solid, semi-solid or highly viscous substance comprising organic substances, such as lignin.

Formaldehyde phenol resin, sometimes referred to as phenol formaldehyde resin, and paraformaldehyde phenol resin are known to the person skilled in the art.

Expressed differently, the electrode material may comprise the modified lignin crosslinked to a catechol, thereby being in the form of a resin.

In some embodiments, the electrode material further comprises an electrically conducting carbon material, such as graphite, such as graphene, such as carbon black, such as carbon nanotubes. The electrically conducting material provides improved electrically conductive properties to the electrode material. The electrically conducting material is preferably arranged in close contact with the modified lignin allowing for a strong interaction there between. As the electrically conducting carbon material counteracts the inherently present insulating properties appearing in parts of a lignin, this allows for an increase of the modified lignin's contribution to the performance of the electrode material. Expressed differently, the electrically conducting carbon materials aids in the transport of electrons to the electrical circuit. The electrons stem from redox reactions in, e.g., the modified lignin.

Herein, the term "electrically conducting carbon material" refers to an electrically conducting carbonous material, i.e., materials mainly consisting of carbon. Examples thereof are graphite, graphene, carbon black, and carbon nanotubes.

In some embodiments, the modified lignin comprises a structure of formula (I) and/or (II):

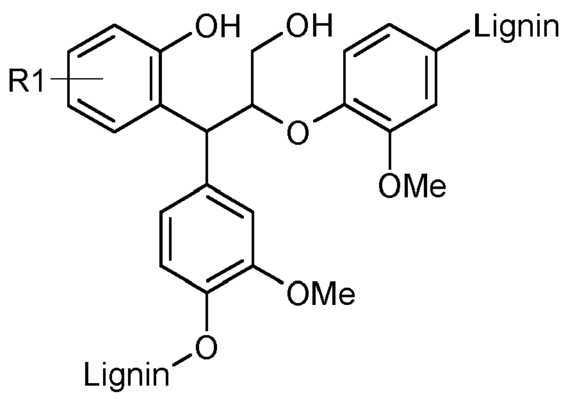

(I)

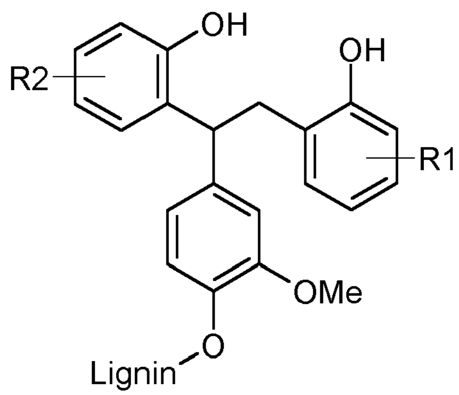

(II)

where R1 and R2 = OH or OMe. (Me=$CH_3$)

The structures of formula (I) and (II) provide a relatively high amount redox active functional groups which advantageously allows for a well-performing electrode material.

In one aspect, there is provided a method for preparing an electrode material comprising the steps of providing a lignin source selected from Kraft lignin, fractioned Kraft lignin, lignosulfonate, hydrolysis lignin, soda lignin, and organosolv lignin, providing a reactant selected from the group consisting of catechol, hydroquinone, and phenols substituted with an alkoxy group, and combining the lignin source and the reactant to form a mixture. The method further comprises steps of reacting the mixture at an elevated temperature for a predetermined time in the presence of a strong acid, precipitating a modified lignin, and preparing an electrode material comprising the modified lignin.

Effects and features of this aspect are largely analogous to those described above in connection with the previously discussed aspect concerning the electrode material.

The method advantageously allows for an efficient method of preparing an electrode material having desirable properties. The lignin source comprises a relatively high amount of hydrolysable ether bonds present in the β-O-4' lignin subsubstructure which have been found unstable in acidic aqueous solutions, such as acidic aqueous electrolytes. The method advantageously reduces the number of hydrolysable ether bonds in the lignin source thus allowing for the production of a more stable electrode material in, e.g., acidic conditions and during electrochemical cycling. For example, the method allows for reducing the number of ether bonds in the β-O-4' substructure by replacing the hydrolysable bonds with non-hydrolysable carbon-carbon bonds.

In some embodiments, the lignin source is Kraft lignin or lignosulfonate. In some embodiments, the lignin source is lignosulfonate. In some embodiments, the lignin source is Kraft lignin.

Formula (III) shows an example reaction scheme of the production of a modified lignin. In the present example, a lignin source and phenols substituted with an alkoxy group are provided as reactants and react so as to form two products each representing a modified lignin. In some embodiments, the present reaction takes place in concentrated sulfuric acid and under heating.

Formula (III):

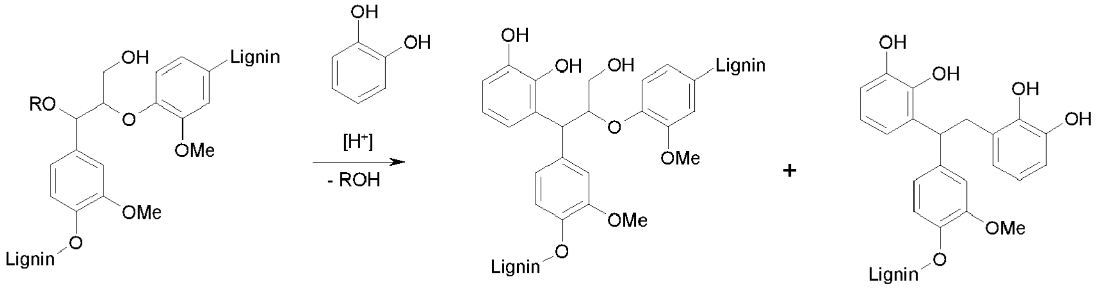


It is understood that lignin may be considered a diverse and complex chemical. Without wishing to be bound by

any particular theory, according to the present disclosure a general strategy for functionalization of lignin comprises aliphatic alcohols (R = H) or hydrolysable ether bonds (R = Lignin) in the β-O-4' lignin substructure being replaced by carbon-carbon bonds. Condensation may occur via electrophilic aromatic substitution by the benzyl carbocation on the electron-rich catechol. To the lignin substructure, one or two phenol units can be added, as represented in the two right-most chemical structures of formula (III).

In some embodiments, the step of preparing an electrode material further comprises combining the modified lignin with a formaldehyde or paraformaldehyde and 4-methoxyphenol to form a second mixture, and reacting the second mixture to form a resin comprising the modified lignin, 4-methoxyphenol and formaldehyde or paraformaldehyde. In some embodiments, the step of reacting the second mixture to form a resin comprises crosslinking the modified lignin and the 4-methoxyphenol to formaldehyde or paraformaldehyde.

In some embodiments, wherein combining the modified lignin with a formaldehyde or paraformaldehyde and 4-methoxyphenol to form a second mixture comprises heating said second mixture to a temperature of 60-120 °C, such as 70-110 °C for a second predetermined time. Heating said second mixture to a temperature of 60-120 °C, such as 70-110 °C for a second predetermined time ensures the formation of crosslinks between the modified lignin crosslinked to formaldehyde or paraformaldehyde phenol resin.

In some embodiments, the step of preparing an electrode material comprising the modified lignin, further comprises a sub-step of mechanically milling the modified lignin and a conductive carbon material. The sub-step of mechanically milling increases the contact area between the modified lignin and the conductive material. This allows for the production of an improved electrode material as the increased contact area allows for electron transport from the modified lignin via the conductive material to an electrical circuit when the electrode material is in use.

In some embodiments, the mechanically milling comprises solvent-free mechanical milling, such as solvent-free ball milling. Solvent-free milling allows for an environmentally friendly method by avoiding the use of toxic and/or non-eco-friendly solvents. Solvent-free ball milling of lignin is described in European patent application 19155073.0, published as EP3691000 A1.

In some embodiments, the elevated temperature is in the range of 160-200 °C, such as 170-190 °C.

In some embodiments, the strong acid is sulfuric acid. The sulfuric acid has proven to be particularly suitable in the production of the electrode material comprising modified lignin. The sulfuric acid may be concentrated sulfuric acid. In some embodiments, the strong acid has a concentration of at least 15 M, such as at least 17 M, such as at least 18 M.

Sulfuric acid, also referred to as $H_2SO_4$, is known to the person skilled in the art.

In some embodiments, the lignin is lignosulfonate. This particular lignin has proven to be particularly suitable in the production of the electrode material. The lignosulfonate has proven provide an electrode material having particularly desirable properties.

In some embodiments, the lignin is Kraft lignin. This particular lignin has proven especially suitable in the production of the electrode material. The Kraft lignin has proven to provide an electrode material having particularly desirable properties.

In one aspect, there is provided an energy storage device comprising a cathode, an anode and an electrolyte disposed between the cathode and the anode, wherein the cathode comprises the electrode material as described herein. The EES devise is environmentally friendly and possess desirable electrochemical properties.

Herein, the terms "positive electrode" (or "positrode" or "cathode") and "negative electrode" (or "negatrode" or "anode") are known to the person skilled in the art.

In one aspect there is provided a method comprising the steps of providing an agarose and providing an aqueous solution comprising magnesium methanesulfonate. The method further comprises combining the agarose and the aqueous solution to form a mixture and forming a hydrogel from said mixture.

In some embodiments, the method comprises a step of providing a second salt to the mixture, wherein the second salt magnesium salt of poly(2-acrylamido-2-methyl-1-propanesulfonic acid).

Where applicable, embodiments of other aspects described herein apply also to the presently discussed aspect. Effects and features of the presently discussed aspect are largely analogous to those described above in connection with the previously discussed aspects.

In one aspect, there is provided a hydrogel comprising agarose in the range of 1% to 6% by weight of the hydrogel. The hydrogel further comprises magnesium methanesulfonate. The concentration of $Mg^{2+}$ in the hydrogel is 0.1 to 5M. In some embodiments the concentration of $Mg^{2+}$ in the hydrogel is 0.1 to 2.5M

In some embodiments, the hydrogel comprises a second salt, wherein the second salt is magnesium poly(2-acrylamido-2-methyl-1-propanesulfonic acid).

Where applicable, embodiments of other aspects described herein apply also to the presently discussed aspect. Effects and features of the presently discussed aspect are largely analogous to those described above in connection with the previously discussed aspects.

In one aspect there is provided a method comprising the steps of providing an agarose and providing an aqueous solution comprising aluminium methanesulfonate. The method further comprises combining the agarose and the aqueous

solution to form a mixture and forming a hydrogel from said mixture.

In some embodiments, the method comprises a step of providing a second salt to the mixture, wherein the second salt is an aluminium poly(2-acrylamido-2-methyl-1-propanesulfonic acid).

Where applicable, embodiments of other aspects described herein apply also to the presently discussed aspect. Effects and features of the presently discussed aspect are largely analogous to those described above in connection with the previously discussed aspects.

In one aspect, there is provided a hydrogel comprising agarose in the range of 1% to 6% by weight of the hydrogel. The hydrogel further comprises aluminium methanesulfonate. The concentration of $Al^{3+}$ in the hydrogel is 0.1 to 5M. In some embodiments the concentration of $Al^{3+}$ in the hydrogel is 0.1 to 2.5M.

In some embodiments, the hydrogel comprises a second salt, wherein the second salt is aluminium poly(2-acrylamido-2-methyl-1-propanesulfonic acid).

Where applicable, embodiments of other aspects described herein apply also to the presently discussed aspect. Effects and features of the presently discussed aspect are largely analogous to those described above in connection with the previously discussed aspects.

***Examples***

***Synthesis of zinc methanesulfonate***

Zinc acetate dihydrate (102.8g, 0.4683 mol) was dissolved in a solution of methanesulfonic acid (90g, 0.9365 mol) in 200 mL of water. The solution was concentrated under evaporation and recrystallized in ethanol to form zinc methanesulfonate as white crystals.

Magnesium and aluminum methanesulfonate were prepared according to the same procedure and was recrystallized from water.

***Synthesis of PAMPSA zinc salt***

To 100g of poly(2-acrylamido-2-methyl-1-propanesulfonic acid) in water (15%, Mw = 2000000) was added 7.94 g zinc acetate dihydrate and the mixture was dried under vacuum to remove water and acetic acid. The PAMPSA zinc salt was diluted with water to 4 M concentration.

PAMPSA magnesium salt and PAMPSA aluminum salt was prepared according to the same procedure and was diluted to 1M starting from magnesium acetate tetra hydrate and aluminum acetate dibasic.

***Synthesis of hydrogels***

Agarose powder (Sigma Aldrich, Type IV, Special High electroendosmosis (EEO)) was added to water containing a chosen concentration of zinc methanesulfonate ($Zn(OMs)_2$) to form a mixture. The concentration of agarose was varied between 2 to 5 wt% by weight of the mixture. Each sample was tested at several points within the range of 2 to 5 wt%. The salt concentration in all samples was kept constant with an initial concentration of 1 M, which after partial drying of water resulted in a final salt concentration that was 50% higher than the original solution, i.e., the zinc concentration of all hydrogels was 1.5 M. In examples A and B, other salts of methanesulfonic acid ($K^+$, $Na^+$) were added to the mixture as secondary electrolyte. In example C, a solution of 0.5 M MES and 1 M zinc methanesulfonate was buffered with NaOH (sodium ion content is in the range of 0.125 - 0.25 M). MES is a zwitterion and can function as both co-electrolyte and pH buffer.

Each solution was heated to 70-80 °C for the dissolution of agarose after which the solution is poured onto the petri dish. The solution was allowed to cool to room temperature and the hydrogel formed was kept for 2-3 hours at room temperature for partial drying of the water. Once the hydrogel had solidified it was cut into discs and suitable for use as electrolyte in a coin cell. In examples E, modifications of the agarose gel were carried out by replacing some part of water by glycerol (typically 25%). Hydrogels can be prepared with additives similar to glycerol, such as ethylene glycol. The compositions of the different inventive hydrogels are presented in table 1 below. In sample G, the zinc salt was zinc chloride.

Also presented in table 1 are comparative samples F, H, and I, formed in the same manner as samples A, with the difference that the zinc methanesulfonate (zinc mesylate) was replaced by other zinc salts (from Sigma Aldrich). Examples F, H, and I did not form proper hydrogels, meaning that the solutions still remained liquid 1h after pouring into the petri dish. In sample K-M, polymer additives were added to the solution with the purpose to improve the mechanical properties and to improve the electrochemical stability window whilst maintaining a good ion conductivity. It was believed that the polymer bounded sulfonic acid groups in PAMPSA and cellulose ethyl sulfonate (CES) would improve ion conductivity.

Table 1: Composition of produced hydrogels

| Sample ID | Zinc salt | Co-electrolyte | Co-electrolyte [M] | Agarose [wt%] | Glycerol [wt%] | Type of additives | Conc. additives | Forms hydrogel |
|---|---|---|---|---|---|---|---|---|
| A | $Zn(OMs)_2$ | - | - | 2-5 | - | None | - | Yes |
| B | $Zn(OMs)_2$ | KOMs | 1 | 2-5 | - | None | - | Yes |
| C | $Zn(OMs)_2$ | NaOMs | 1 | 2-5 | - | None | - | Yes |
| D | $Zn(OMs)_2$ | MES | 0.5 | 2-5 | - | MES | | Yes |
| E | $Zn(OMs)_2$ | - | - | 2-5 | 25% | None | - | Yes |
| F | $ZnSO_4$ | - | - | 2-5 | - | None | - | No |
| G | $ZnCl_2$ | - | - | 2-5 | - | None | - | Yes |
| H | $Zn(ClO_4)_2$ | - | - | 2-5 | - | None | - | No |
| I | $ZnBr_2$ | - | - | 2-5 | - | None | - | No |
| J | $Zn(OAc)_2$ | - | - | 2-5 | - | None | - | Yes |
| K | $Zn(OMs)_2$ | - | - | 2-5 | - | PVA | 5 wt% | Yes |
| L | $Zn(OMs)_2$ | - | - | 2-5 | - | Zinc salt of PAMPSA | 5-10 wt% | Yes |
| M | $Zn(OMs)_2$ | - | - | 2-5 | - | CES | 1 wt% | Yes |

It was concluded that all samples A-E, G, and J-M formed a hydrogel that could be manually handled and cut into smaller portions. Samples F, H, and I did not form a hydrogel that could be handled and cut into smaller portions. Hydrogels based on other metal ions were also prepared according to the recipe for sample A where the zinc methanesulfonate were replaced with aluminum methanesulfonate (sample N) and magnesium methanesulfonate (sample O), which formed hydrogels, thereby demonstrating the versatility of the methanesulfonate anion for agarose hydrogel preparation. In another trial zinc was replaced by aluminum and magnesium ions in presence of agarose and PAMPSA according to the recipe for Sample L, which also formed an hydrogel. Hydrogels based on aluminum and magnesium ions can potentially be used for EES applications.

***Electrode preparation***

Positive electrodes being either activated carbon or modified lignin with catechol were prepared. Lignin and carbon black (1:1) composite was prepared via mechanical milling in a planetary mill, Retsch PM 100 using $ZrO_2$ milling media at 500 rpm speed for 120 min with ball/powder ratio of ~10-20 in dry condition and ambient atmosphere. The carbon black used was ENSACO 360 G (IMERYS, BET surface area of 780 $m^2/g$ supplier value). After the components were mixed, the aqueous slurry was prepared using CMC-SBR (6%) (Carboxymethylcellulose/Styrene butadiene Rubber) as binder system. The slurry was coated onto 20μm Ni foil that were pre-coated with colloidal carbon with wet thickness of 200-300 μm. The film was dried at 60 °C for 2 h and pressed using a Durston DRM 130 roller press. The pressed material was cut into coin cell electrode formats. Electrochemical measurements of the full cells were performed by assembling CR2032-type coin cells at ambient condition with modified lignin/carbon composite positive electrode (or activated carbon in Zinc ion pseudocapacitor). Hydrogel electrolyte containing Zn salt (cut into disc shape) was used both as electrolyte and separator. Zn foil (100 μm) was used as negative electrode. In some cases, dry pressed Zn/Carbon electrodes were used. In the case of activated carbon electrodes, a commercially available activated carbon ink obtained from *redox.me* was utilized as slurry in a method as described above.

***Preparation of dry pressed zinc anode***

Zinc dust with an average particle size of 10 μm, (35 g) YP50F activated carbon (10 g) and Teflon powder (2.5 g) was mixed in a blender for 2 minutes followed by a 2 minutes rest. The sequence was repeated in total 5 times so that the total mixing time was 10 min. The obtained powder was pressed between titanium sheets into 50 μm zinc sheet using a Durstone 130 roller press and then pressed onto a 20 μm graphite or nickel foil coated with a graphite primer and then cut into coin cell format.

***Preparation of slurry coated zinc anode***

22 mL of triethyl phosphate (TEP) was added to a mixture of activated carbon (8.5 g, YP50F) and carbon black (0.5 g, Ensaco 250) and mixed carefully with a spatula. Zinc dust with an average particle size of 10 μm was added and the mixture was mixed a few minutes using a spatula. The mixture thickened somewhat during the addition.

22 mL of a 13% solution of polyvinylidene fluoride (PVDF) binder in TEP was added and the mixture was mixed using planetary mixer (30s at 800 rpm then 7.5 min at 2350 rpm) to give a smooth slurry suitable for coating or stencil printing.

***Evaluation of electrochemical performance***

Electrochemical performance evaluation of the Zn ion battery and the zinc ion pseudocapacitor was carried out using a computer controlled potentiostat (SP200, BioLogic) and multichannel potentiostat VSP-3e (BioLogic) for the cycle study. Electrochemical measurements are carried out in coin cell geometry (CR2032- type coin cells) at ambient condition. For the zinc deposition and dissolution, symmetric cell with Zn as positive and negative electrodes were assembled with hydrogel electrolyte. For the full cell measurements, Zn foil was used as negative electrode and activated carbon or lignin/carbon composite was used as positive electrode along with hydrogel electrolyte. The electrodes were evaluated by the cyclic voltammetry (CV) at different scan rates and the galvanostatic charge discharge (GCD) by applying different charging rates (mass or area normalized current).

***Ionic conductivity of the hydrogel electrolyte***

Impedance measurements were carried out using impedance spectrometer (Alpha high-resolution dielectric analyzer, Novocontrol Technologies GmbH) using a two-point probe method. An AC voltage of 5 mV was applied while sweeping the frequency from $10^6$ Hz to 1 Hz and the measurements were carried out at room temperature. Since the measurement was done with 2 probe geometry, the contact resistance was determined for the hydrogel electrolytes by measuring the impedance by varying the thickness of the gel electrolyte. Resistance is calculated from the Bode plot at almost zero phase angle. The bulk ionic conductivity was calculated as $\sigma = d /(R \times A)$, where d, A and R are the distance between the electrodes, area of cross section and resistance, respectively. The resistance used for the calculation is obtained after subtracting the contact resistance.

Figure 1a shows the ionic conductivity and activation energy for various inventive hydrogels. For the hydrogel (without glycerol) with 1 M $Zn^{2+}$ ion concentration in the hydrogel, the ionic conductivity was 11.6 mS/cm (molar conductivity is 11.6 S $cm^2$ $mol^{-1}$) and incorporation of a second salt, namely 1 M $Na^+$ decreased the ionic conductivity to 5.4 mS $cm^{-1}$ (molar conductivity is 2.7 S $cm^2$ $mol^{-1}$). The ionic conductivity of buffered1 M $Zn^{2+}$ 12.2 mS $cm^{-1}$ (molar conductivity is 8.13 S $cm^2$ $mol^{-1}$). The ionic conductivity for the hydrogels containing glycerol (25 % water is replaced by glycerol), with 1 M $Zn^{2+}$, 1 M $Zn^{2+}$ - 1M $Na^+$ and buffered 1 M $Zn^{2+}$ are 10, 18, and 14 mS $cm^{-1}$, with corresponding molar conductivity of 10, 9 and 9 S $cm^2$ $mol^{-1}$ respectively. Figure 1b is the typical Arrhenius ionic conductivity plot for 3 % agarose gel containing 25 % glycerol with 1 M $Zn^{2+}$ and 1 M $Na^+$ ions.

As seen in the Figure 1b, the conductivity increased linearly with temperature following the Arrhenius behavior of formula (IV),

$$\sigma(T) = \sigma_0 \, e^{-E_a/KT}, \qquad \text{(IV)}$$

where σ (T) is conductivity at a given temperature, K is the Boltzmann constant, T is the absolute temperature, $\sigma_0$ is a constant related to the conductivity at 0 K and $E_a$ is the activation energy. The graph is presented as the log conductivity verses the inverse temperature and fitted with linear equation with $R^2$ of fit as 0.99, indicating a very good linear fit. Linear relations observed in the polymer electrolytes mean that there is neither phase transition in the polymer matrix nor domain formed by the addition of the salt and weak acids [Appl. Phys. A 119, 387-396 (2015), Sol. Energy Mater. Sol. Cells 93(8), 1167 (2009)]. Linear variation of conductivity with inverse temperature is typical for polymers where hopping mechanism between the coordinating sites of the ionic and protonic charge species is predominant though other kinds of motion like segmental motion may be present [Electrochim. Acta 53(4), 1648-1654 (2007), Electrochim. Acta 55(4), 1455-1459 (2010), Solid State Ion. 94, 35 (1997)]. Similar temperature dependance has been reported for agar with $LiClO_4$, $KClO_4$, lactic acid and acetic acid [Appl. Phys. A 119, 387-396 (2015)]. Activation energy of 0.37 eV was estimated from the linear fit and is comparable to the values reported in the literature for agarose [Acta 55(4), 1455-1459 (2010)] and other natural polymers like gelatin [Electrochim. Acta 53(4), 1648-1654 (2007), Opt. Mater. 35(2), 187-195 (2012), Opt. Mater. 32(6), 719-722 (2010)] and starch [Solid State Ion. 181(13-14), 586-591 (2010)].

In summary, Figure 1a shows the ionic conductivity and activation energy for various inventive hydrogels (b) typical Arrhenius ionic conductivity plot for 3 % agarose gel containing 25 % glycerol with 1 M $Zn^{2+}$ and 1 M $Na^{+}$ ions.

***Electrochemical stability window of the hydrogel electrolyte***

Electrochemical stability window (ESW) of the agarose hydrogel electrolyte was studied by the linear scan voltammetry (LSV) at a scan rate of 1 mV/s in the coin cell geometry with Zn foil as counter and reference electrode and Ni coated with colloidal graphite carbon (CC) as the working electrode. For comparison, Ni foil without the carbon coating was also used. Potential was scanned from 0 to 3 V (Vs $Zn/Zn^{2+}$) and the current was normalized with respect to the area of the electrode (2 $cm^2$). Figure 2a and b show the ESW for the 3% agarose gel with and without the glycerol modification. As seen in the graphs, the data for Ni coated with carbon (Ni/CC) shows higher stability than bare Ni in both unmodified and glycerol modified hydrogel electrolytes. Maximum current observed in the potential range of operation was less than 6 $\mu A/cm^2$. This confirms a good stability of the electrolyte in the region of interest (0.5-1.5 V Vs $Zn/Zn^{2+}$).

In summary, Figure 2 shows (a) ESW of the hydrogel electrolytes with Ni and Ni coated carbon as working electrode, (b) zoomed in data in the range of typical measurement (0.5 -1.5 V Vs $Zn/Zn^{2+}$).

***Deposition and stripping of Zn***

The effect of the hydrogel electrolyte with and without glycerol on the Zn deposition and dissolution were studied in a symmetric Zn/Zn cell in a coin cell geometry using Zn foils as electrodes. The measurements were done at two different current densities, namely, 0.1 mA $cm^{-2}$ (0.2 mA current applied in a coin cell of cross-sectional area of 2 $cm^2$) and 1 mA $cm^{-2}$ (2 mA current applied in a coin cell of cross-sectional area of 2 $cm^2$) and the deposition and dissolution were carried out for 30 min duration each. Figure 3a and b show the X-ray diffraction (XRD) patterns and SEMs of Zn electrodes after 1 cycle and 50 cycles at the mentioned current densities.

As seen in Figure 3a, the XRD patterns indicate that without the addition of glycerol in the hydrogel, there is no significant difference between the pristine Zn and the electrodes after cycling at 0.1 mA $cm^{-2}$, indicating reversible behavior of Zn deposition and dissolution. Even though there is an increase in the relative intensity of the planes with increased number of cycling and also at higher current density (1 mA $cm^{-2}$), the presence of all major lattice planes indicates the deposition in different crystallographic growth direction. [ACS Appl. Mater. Interfaces. 9, 18691-18698. doi:10.1021/acsami.7b01705, J. Electroanal. Chem. 663, 98-107. doi:10.1016/j.jelechem.2011.10.00, J. Ind. Eng. Chem. 26, 107-115. doi:10.1016/j.jiec.2014.11.021, https://doi.org/10.3389/fenrg.2020.599009]. This is also observed in the SEM images of the Zn electrode surface shown in Figure 3b (Zn surface for hydrogel without glycerol). For deposition/dissolutions at lower current densities (both for 1 cycle and 50 cycle), the crystallite size is larger, compared to the higher current densities (for both 1 cycle and 50 cycle). It is important to note that hydrogel containing glycerol promotes (100) orientation compared to the hydrogel without glycerol. This is evident from the XRD for the both 0.1 and 1 mA $cm^{-2}$ current densities for 50 cycles as the relative intensity of the (100) plane is higher compared to the Zn deposition/dissolution in the absence of glycerol. SEM of the Zn surface (Figure 3b) for the deposition/dissolution in presence of glycerol-containing hydrogel show a morphology that is significantly different from the depositions/dissolutions in the absence of glycerol in the hydrogel. The morphology shows a highly porous interconnected cage-like network that has an orientation parallel to the (basal plane) Zn surface and free of dendritic structure. This is beneficial for Zn ion battery/capacitor cycle stability as the porous network facilitates the ionic diffusion within the Zn electrode with three-dimensional electrical and ionic contact within the subsequently deposited layers [Angew.Chem.Int.Ed.2019,58,2760-2764]. Clear comparison can be done by the morphology shown in the magnified images in Figure 3c-f.

In summary, Figure 3: (a) shows the XRD of the Zn deposition and dissolution for 30 min of duration each after one cycle and 50 cycles at 0.1 and 1 mA $cm^{-2}$ current densities and (b) shows the corresponding SEMs.

Figure 3c and 3d show the pristine Zn surface and the surface morphology after 50 cycles of deposition and dissolution at current density of 1 mA $cm^{-2}$ in presence of hydrogel that does not contain glycerol. Here it can be clearly seen that the crystallites are large and grown mainly not parallel to the Zn surface. However, in the hydrogel containing glycerol, the morphology is shown to be clearly parallel to the Zn surface both after first cycle and 50 cycles at 1 mA $cm^{-2}$.

In summary, Figure 3: (c) shows the pristine Zn surface, (d) Zn electrode surface after 50 cycles of depositions/dissolution at current density of 1 mA $cm^{-2}$ in presence of hydrogel without glycerol, (e) and (f) Zn electrode surface after 1 and 50 cycles of depositions/dissolution at current density of 1 mA $cm^{-2}$ in presence of hydrogel with glycerol.

Figure 3e and f show the Zn electrode surface after 1 and 50 cycles of depositions/dissolution at current density of 1 mA $cm^{-2}$ in presence of hydrogel with glycerol.

Further the hydrogel electrolytes were characterized for the deposition and stripping of Zn. For this study, a symmetric Zn cell was assembled with the hydrogel electrolyte and Zn foils with coin cell geometry. Figure 4 is the CV. CV was varied out a scan rate of 2 mV/s in the potential range of -0.4V to 0.4 V Vs $Zn/Zn^{2+}$. CV shows symmetric curves for all the hydrogel electrolyte combinations, namely; 1 M $Zn^{2+}$ (no glycerol), 1 M $Zn^{2+}$-1M $Na^{+}$ (no glycerol), 1M $Zn^{2+}$-1M $Na^{+}$

(with glycerol) and the buffered 1 M $Zn^{2+}$ (with glycerol). As supporting electrolyte was added in addition to the $Zn^{2+}$, the deposition of Zn started at lower overpotential and similar trend was seen for the stripping of Zn. The maximum current decreased with the addition of glycerol in the hydrogel indicated by the increased solution resistance. It is noted that as additional salt was incorporated into the agarose hydrogel, the overpotential needed for deposition of zinc was reduced. The presence of two (2) peaks in the CV curves can be attributed to the effect of surface morphology due to the initial zinc growth on the subsequent growth.

In summary, Figure 4 shows the CV of the symmetric Zn/Zn cell with agarose hydrogel containing 1 M $Zn^{2+}$ (no glycerol), 1 M $Zn^{2+}$-1M $Na^+$ (no glycerol), 1M $Zn^{2+}$-1M $Na^+$ (with glycerol) and the buffered 1 M $Zn^{2+}$ (with glycerol) at a scan rate of 2 mV/s.

Figure 5a shows the cyclic study of the Zn deposition and dissolution carried out at different current densities in a symmetric Zn/Zn cell using agarose hydrogel electrolyte containing 1 M $Zn^{2+}$ (no glycerol), 1 M $Zn^{2+}$-1M $Na^+$ (no glycerol), 1M $Zn^{2+}$-1M $Na^+$ (with glycerol). Current densities were varied as 0.2 mA $cm^{-2}$, 0.4 mA $cm^{-2}$, 0.5 mA $cm^{-2}$and 1 mA $cm^{-2}$. Deposition and dissolution were carried out for 30 min each and this cycle was repeated 125 times at each current density. Figure 5b shows the cycle data (1125 deposition and dissolution cycles with 30 min duration for each process) of the Zn/Zn symmetric cell for the deposition and dissolution at 0.25 mA $cm^{-2}$ current density in presence of the buffered hydrogel electrolyte with 1 M $Zn^{2+}$. The inset shows that the curves are very symmetric in both directions and highest overpotential attained was below 50 mV vs Zn/$Zn^{2+}$. The cell was successfully cycled for almost 48 days.

***Comparison of deposition and stripping of zinc behavior between slurry coated and dry pressed electrodes***

A comparison was carried out between the zinc foil and electrodes prepared from zinc particles, activated carbon and a binder for undertaken. The larger surface area of zinc particles should allow for higher currents, reduction of polarization voltage and increased number of cycles. Zn electrode prepared via slurry coating of the Zn/activated carbon composite and dry pressing of the Zn/activated carbon composites were studied for the deposition and dissolution behavior in hydrogel electrolyte and are presented in Figure 6a and b. Here the electrodes were studied at different current densities for 5 cycles of deposition/dissolution each for the duration of 30 min. As seen in the Figures 6a-b, the slurry coated electrodes showed lower overpotential for the deposition and dissolution of the Zn than that zinc foil (0.08 V at 1 mA/cm2) of the dry pressed Zn electrodes (0.1 V at 1 mA/cm2). The dry pressed zinc electrode comprises Teflon as binder and has poor wettability, meaning that water and salts in the hydrogel not easily can penetrate the electrode. Trials were done with excess of electrolyte added to the electrode before applying the hydrogel electrolyte as well as addition of excess of electrolyte using a Whatman glass filter separator in absence of the hydrogel. The use of excess electrolyte can reduce polarization voltage for both hydrogel electrolytes and glass fiber separator as shown in Figure 7.

Deposition and dissolution were carried out for 30 min each and this cycle was repeated for 170 cycles as shown in Figure 7a and b. As seen in the magnified data in Figure 7b, the curves after 170 cycles are very symmetric in both directions and overpotential attained is below 20 mV vs Zn/$Zn^{2+}$.

***Zinc ion pseudocapacitor***

A zinc ion pseudocapacitor was assembled with Zn foil as the negative electrode and activated carbon coated on Ni (with base conducting carbon coating) as the positive electrode. The hydrogel electrolyte used was the 3% agarose with glycerol (25% of water replaced with glycerol) containing 1 M $Zn^{2+}$ and 1 M $Na^+$ ions. Figure 8a and b show the CV at different scan rates and corresponding peak current versus scan rate data. The scan rate was varied from 2 mV/s up to 32 mV/s in the voltage range of 0.5 V to 1.5 V. The CV curves display the nearly rectangular shape in the voltage window, indicating the characteristics of the electrochemical double-layer capacitor in the activated carbon electrode. This is also supported by the current versus scan rate plots (Figure 8b) wherein the current corresponding to both reduction and oxidation process follow a linear behavior with respect to the scan rate ($R^2$ for the fit is 0.999). The linear behavior suggests that the charge storage mechanism dominated by the surface-controlled process at the electrode surface (activated carbon).

***Galvanostatic charge-discharge***

Furthermore, the capacitive behavior of the system was investigated via galvanostatic charge-discharge (GCD) measurements at current densities from 0.1 to 20 mA $cm^{-2}$. Figure 9a and b show the GCD plots with discharge capacity represented in terms of mAh $g^{-1}$ and mAh $cm^{-2}$ respectively. Linear discharge plots agree well with the surface controlled capacitive charge storage mechanism. Measurements at different rates of charge/discharge suggest good rate capability of the zinc ion pseudocapacitor with only 26% reduction in the discharge capacity when the charge/discharge rate was increased by 100 times. Maximum discharge capacity of 27.5 mAh $g^{-1}$ (0.13 mAh $cm^{-2}$) is obtained at a charge/discharge rate of 0.021 A $g^{-1}$ (0.1 mA $cm^{-2}$). Areal capacitance of 479 mF $cm^{-2}$ was obtained at a charge/discharge rate of 0.1 mA

$cm^{-2}$. Corresponding mass normalized capacitance was 100.7 F $g^{-1}$ at the same charge/discharge rate. It is important to note that the weight of the zinc foil was not included in the calculation of capacitance.

In summary, figure 9a and b show the GCD plot of the zinc ion pseudocapacitor at different charge/discharge rates with discharge capacity represented in mass normalized and area normalized values respectively.

Figure 10a and b show the Ragone plots show in the mass normalized and area normalized values respectively of specific power and specific energy. Highest specific energy of 26 Wh $kg^{-1}$ (123.6 $\mu$Wh $cm^{-2}$) was obtained at 0.021 A $g^{-1}$ (0.1 mA $cm^{-2}$) charge/discharge rate. Highest specific power of 7055 W $kg^{-1}$ (33.5 mW $cm^{-2}$) was obtained at 10.5 A $g^{-1}$ (50 mA $cm^{-2}$) charge/discharge rate.

In summary, figure 10: a and b show the Ragone plot of the zinc ion pseudocapacitor represented in mass normalized and area normalized values respectively.

Further the leakage current and the self-discharge of the zinc ion pseudocapacitor was measured and presented in the figure 11a and b respectively. The leakage current measurement was done by maintaining the voltage at 1.5V and also 1.2V by constant current charging at a rate 1 A $g^{-1}$ followed by chronoamperometry, wherein constant voltage (1.5 or 1.2V) was applied and the current through the device was measured as a function of time. When the cell was charged to 1.2 V the leakage current was lower and also decreased faster compared to the case when the cell was charged to 1.5 V. For example, at 0.2 h at constant voltage charging, the leakage current for 1.2 V cell voltage was almost 45% lower than when the voltage was 1.5 V. Self-discharge was measured by charging the cell to both 1.2 V and 1.5 V followed by measuring the open circuit voltage with time. There was 12 % reduction in the open circuit at the end of 4 days for 1.5 V cell voltage, however for the 1.2 V cell voltage, only 5 % reduction in the voltage was observed even after 5 days of self-discharge.

***Galvanostatic cycle stability***

The galvanostatic cycle stability of the zinc ion pseudocapacitor was performed by charging the zinc ion pseudocapacitor to 1.5 V using a charge/discharge current of 1.05 A $g^{-1}$ (5 mA $cm^{-2}$). Figure 12a shows the energy and Coulombic efficiency of the zinc-ion capacitor when cycled for 22000 cycles. Energy efficiency of ~80 % was observed and Coulombic efficiency was 94-96 %. Capacity retention and the discharge capacity are presented in figure 12b. Capacity retention was between 90-95 % and the discharge capacity variation was between 20-22 mAh $g^{-1}$.

***Temperature studies of Zinc ion pseudocapacitor***

Temperature studies of the Zinc ion pseudocapacitor described above was carried out in climate chamber and are presented in the Figure 13. The capacity retained at temperatures of 10, 0, -10, and -20 °C are 96, 91, 83 and 57 %, respectively for 0.08 A $g^{-1}$. After the temperature cycle the cell retains 98-99 % of the capacity at all current densities measured, indicating good temperature stability of the hydrogel electrolytes.

***Synthesis of modified lignin***

Modified lignins were prepared using various commercially available lignin, such as soft wood or hard wood Kraft lignin purified using the lignoboost process, hydrolysis lignin or technical grade lignosulfonate. Modified lignins were prepared under acidic conditions and solvent free conditions by a condensation reaction between lignin and a catechol, 4-methoxyphenol and guaiacol, respectively as described below.

Various lignins [Kraft lignin, lignosulfonate, hydrolysis lignin] (10.0 g) were each dissolved in 20 g of molten catechol, guaiacol, 4-methoxyphenol. Concentrated $H_2SO_4$ (5mL) was then added dropwise to the reaction mixture at 180 °C while stirring, for 60 minutes. The reaction mixture was cooled down and dissolved in 200 ml acetone and then precipitated by adding slowly into 1.5 liter of dilute $H_2SO_4$ (2 N (Normality)). The precipitate was separated using sintered funnels. The crude product was washed with water (4 x 250 mL) followed by diethyl ether (4 x 200 mL). The product obtained was dried under vacuum at 120 °C for 5 hours to give modified lignins 2, 3, 4, 6, 10, 11, 13 and 15 (Table 2) as brown powders.

***Synthesis of modified lignin catechol formaldehyde resin***

The modified lignin catechol formaldehyde resins 16 to 19 were synthesized by batch copolymerization according to the weight ratio of modified lignin (sample 3 in table 2) to formaldehyde ranging from (1:0.1) to (1:1); or to the weight ratio of 4-methoxyphenol, lignocatechol (sample 3 in table 2) to formaldehyde (0.25:1:0.6). The NaOH concentration (weight ratio of NaOH to the weight of 4-methoxyphenol and modified lignin) was 20%. Modified lignin, 4-methoxyphenol and NaOH were mixed in a flask and heated at 80°C. The formaldehyde solution was added in portions and the mixture was heated for 16h at reflux. The reaction mixture was cooled to room temperature and precipitated by adding slowly into dilute $H_2SO_4$ (1 N). The precipitate was separated using sintered funnel. The crude resin was washed

with water followed by diethyl ether. The product obtained was grinded and dried under vacuum to give resin samples 16-19.

An acid copolymerized modified liginin catechol formaldehyde resin, sample 20, was prepared according to the weight ratio of 4-methoxyphenol, modified lignin (sample 3 in table 2) to paraformaldehyde (1:1:0.5). The sulfuric acid concentration (weight ratio of sulfuric acid to the weight of 4-methoxyphenol and modified lignin) was 20%. Sulfuric acid was added to a mixture of 4-methoxyphenol, modified lignin and paraformaldehyde and the reaction mixture was heated at 100 °C over night. The reaction mixture was cooled to room temperature and precipitated by adding slowly into dilute $H_2SO_4$ (2 N). The precipitate was separated using sintered funnel. The crude resin was washed with water followed by diethyl ether. The crude resin was grinded and dried under vacuum to give sample 20 as a brown powder.

***Gel Permeation Chromatography analysis***

Gel Permeation Chromatography (GPC) analyses were performed using Agilent 1260 Infinity II instrument with triple detectors (RI, LS, Viscometry). Two GPC columns (Agilent PolarGel M, PL1117-6800, 8 μm, 300 × 7.5 mm) were connected in series for analyses. HPLC-grade DMF with 0.1% LiBrwas used as the eluent (0.5 mL min-1, at 30°C). Standard calibration was performed with polymethyl methacrylate standards (EasiVials, MW range 535 - 2210 000 g/mol). The dissolved samples (DMF) were shaken for 10 mins at room temperature and filtered over a 0.45 μm syringe filter. Sample detection was performed with triple detectors. All data were recorded using Agilent GPC/SEC V2.2 Software.

The molecular weights of the lignin and modified lignin fractions were analyzed by GPC. The molecular weights of the technical lignin as well as the fractioned Kraft lignin 8 and 9 were quite different compared to previously reported data (Mn = 700 g/mole, Mw = 6500 g/mole, PDI = 9.89 for KL). Typical literature values are Mn = 1400 g/mole, Mw = 6000 g/mole, PDI = 4.3. The absolute molecular weight values differed a lot depending on the type solvents used as eluent and the references used in the experimental set-up and molecular values should be regarded as relative. The synthesized modified lignins 2, 3 and 4 were all characterized by a reduced molecular weight, since the reaction conditions used may result in ether cleavage and hence breakage of the chemical bonds that builds up the polymeric structure of lignin (Table 2). Molecular weight of the modified lignin formaldehyde resins could not be recorded.

Table 2: Number average molecular weight (Mn), weight average molecular weight (Mw), and polydispersity index (PDI) for sampes 1-19. Samples with empty cells have not been evaluated.

| ID | Sample description | Mn (g/mol) | Mw (g/mol) | PDI |
|---|---|---|---|---|
| 1 | Soft wood Kraft lignin (KL) *comparative* | 1368 | 25370 | 18.5 |
| 2 | Modified Lignin (catechol + KL) *inventive* | 817 | 11910 | 14.6 |
| 3 | Modified lignin (4-methoxyphenol + KL) *inventive* | 589 | 8075 | 13.7 |
| 4 | Modified lignin (2-methoxyphenol + KL) *inventive* | 580 | 5185 | 8.9 |
| 5 | Soft wood lignosulfonate (LS) *comparative* | | | |
| 6 | Modified lignin (catechol + LS) *inventive* | 281 | 4565 | 16.2 |
| 7 | 3,4-Dihydroxybenzoic acid *comparative* | | | |
| 8 | ASKL *comparative* | 814 | 5947 | 7.3 |
| 9 | AIKL *comparative* | 5360 | 199000 | 37.0 |
| 10 | Modified lignin (catechol and ASKL) *inventive* | 354 | 4508 | 12.8 |
| 11 | Modified lignin (catechol and AIKL) *inventive* | 586 | 10050 | 17.2 |
| 12 | Softwood hydrolysis lignin *comparative* | | | |
| 13 | Modified lignin (catechol and softwood hydrolysis lignin) *inventive* | | | |
| 14 | Hardwood Kraft lignin *comparative* | | | |
| 15 | Modified lignin (catechol and hardwood hydrolysis lignin) *inventive* | | | |
| 16 | Modified lignin sample 3 formaldehyde resin (1:1) *inventive* | | | |
| 17 | Modified lignin sample 3 formaldehyde resin (1:0.5) *inventive* | | | |
| 18 | Modified lignin sample 3 formaldehyde resin (1:0.1) *inventive* | | | |

(continued)

| ID | Sample description | Mn (g/mol) | Mw (g/mol) | PDI |
|---|---|---|---|---|
| 19 | 4-Methoxyphenol: Modified lignin sample 3:formaldehyde resin (0.25:1:0.6) *inventive* | | | |
| 20 | 4-Methoxyphenol: Modified lignin sample 3:paraformaldehyde resin (1:1:0.5) *inventive* | | | |

***Sample derivatization and NMR characterization***

The obtained hydroxyl groups of modified lignin samples were phosphitylated and quantified using $^{31}P$ NMR spectroscopy by an adjusted method according to Granata and Argyropoulos [A. Granata D. S. Argyropoulos, J. Agric. Food Chem. (1995) 43, 1538-1544]. A modified lignin sample was dissolved using a mixture of DMF and pyridine, in presence of an internal standard (IS) and relaxation reagent, and phosphitylated using a mixture of a derivatization reagent and deuterated chloroform. The phosphitylated sample was then scanned using liquid state $^{31}P$-NMR spectroscopy and the hydroxyl groups were quantified by integration of the corresponding signals from obtained $^{31}P$-NMR spectra.

The quantitative hydroxyl group determination was analyzed by $^{31}P$ NMR and a comparison was done between modified lignin synthesized from different starting materials and unmodified Kraft lignin. Lignin does not contain any phosphorus and the $^{31}P$ NMR method was made possible by preparing a phosphite ester of its hydroxyl groups. Lignosulfonate (sample 5) could not be analyzed due too poor solubility in the standard organic solvents used for NMR analysis. The chemical environment surrounding the different hydroxyl groups affect the chemical shifts of the $^{31}P$ nuclei so as to allow for separate detection of the aliphatic-, 5-substituted- (syringyl and 5-condensed structures), guaiacyl-, p-hydroxyphenyl hydroxyl groups and the amount of carboxyl groups can be detected see Figure 1. In other words, Figure 1 depicts Quantitative $^{31}P$ NMR spectra and signal assignment of Pristine and modified lignin derivatives. Content of hydroxyl groups (OH) was calculated from integrated area. The catechol group is overlapping the guaiacyl and the p-hydroxyphenyl groups with peaks at 139 and 138 ppm respectively. The content of p-hydroxyphenyl groups in Kraft lignin was low and the total content of chemically added catechol in modified lignin 2 and 6 was calculated using formula (V) to 0.82 and 1.87 mmol/g, respectively.

$$C_{\text{modified lignin}} = C_{\text{H+Catechol}} - C_{\text{H}}\ [\text{Kraft lignin}]\ (\text{V})$$

The high catechol content of 6 compared to 2 may be due to a high content of ether bonds that can participate in the condensation reactions in sample 6 and that soluble residual lignosulfonate fractions were removed during purification. The analysis of added methoxyphenol content in sample 3 - 5 was more complex and comparisons are based on total phenolic content Σ Ph-OH. The peaks for the phenolic OH (Ph-OH) at 137-144 ppm increased significantly after the phenylation for all modified lignins. The chemical modification increased the phenolic content of lignin from 3.26 mmol/g for Kraft lignin 1 to 4.19 - 6.48 mmol/g for modified lignins 2-6 (Table 3).

For the modified lignin compounds 2, 3, and 4, the peak for aliphatic OH at 145-150 ppm almost completely disappeared, which is a strong indication of a successful phenylation type reactions. Other types of reactions that reduced the aliphatic hydroxyl content may have occurred, such acid induced deformylation of the Cγ-OH unit. The modified ligin 6 prepared from lignosulfonate 5 had some remaining aliphatic OH which may be an indication of the lower reactivity triggered by the sulfonate group or an initially higher content of ethers in lignosulfonate compared to Kraft lignin due to a less condensed structure. According to literature data, the typical phenol content in lignosulfonate is 1.1 mmol/g.

Table 3: Contents of functional groups in for example lignin and functionalized lignin, as determined according using $^{31}P$ NMR. The contents are presented as mmol functionalized group/mass of sample. Sample 1, 8 and 9 are comparative, sample 2-4, 6, 10 and 11 are inventive samples, and 3,4-dihydroxybenzoic acid was used as internal standard. AI-OH is the aliphatic hydroxyl group content, Syringyl-OH is the content of syringol groups, G + catechol is the content of guaiacol groups and one of the hydroxyl groups in catechol (overlapping peaks as can be seen in Figure 1), H + catechol is the content of coniferyl groups and one of the hydroxyl groups in catechol (overlapping peaks as can be seen in Figure 1), COOH is the carboxylic acid content, ∑ Ph-OH is the sum of all phenolic hydroxyl groups, ∑-OH is the sum of phenolic hydroxyl groups, aliphatic hydroxyl groups and carboxylic acids).

| ID | Al -OH (mmol/g) | Syringyl -OH (mmol/g) | Σ C5-sub Ph -OH (mmol/g) | G + catechol (mmol/g) | H + catechol (mmol/g) | COOH (mmol/g) | Σ Ph -OH (mmol/g) | Σ -OH (mmol/g) |
|---|---|---|---|---|---|---|---|---|
| 1 | 1.44 | 0 | 1.32 | 1.80 | 0.14 | 0.39 | 3.26 | 5.09 |
| 2 | 0.02 | 0 | 1.34 | 4.18 | 0.96 | 0.19 | 6.48 | 6.69 |
| 3 | 0.04 | 0 | 0.70 | 2.43 | 1.06 | 0.06 | 4.19 | 4.29 |
| 4 | 0.03 | 0 | 1.46 | 2.79 | 0.72 | 0.13 | 4.98 | 5.13 |
| 6 | 0.13 | 0 | 1.09 | 3.02 | 2.01 | 0.18 | 6.11 | 6.42 |
| 8 | 1.17 | 0 | 1.22 | 1.79 | 0.21 | 0.36 | 3.22 | 4.75 |
| 9 | 2.21 | 0 | 0.90 | 0.92 | 0.20 | 0.20 | 2.01 | 4.42 |
| 10 | 0.06 | 0 | 1.21 | 2.87 | 1.69 | 0.14 | 5.78 | 5.97 |
| 11 | 0.06 | 0 | 1.35 | 2.90 | 1.71 | 0.06 | 5.96 | 6.08 |
| 3,4-Dihydroxybenzoic acid (7) | 0.00 | 0 | 0.00 | 5.26 | 5.30 | 5.35 | 10.56 | 15.91 |

***Zinc-ion battery***

The agarose-based hydrogel was also used as electrolyte in the zinc-ion battery structure, wherein Zn was used as the negative electrode and chemically modified lignin/carbon black composite was used as the positive electrode. The hydrogel used is buffered 3 % agarose with (25 % water replaced with glycerol) containing 1M $Zn^{2+}$. Figure 14a shows the CV and figure 14b shows the peak current versus square root of the scan rate graph for both oxidation and reduction process, corresponding to the CV of Figure 14a.Figure 14c the galvanostatic discharge (GCD) plot of the zinc lignin battery at different charge/discharge rates and show Figure 14d the ragone plots for the Zn/lignin device. At 2 mV/s scan rate, the oxidation and the reduction peak is observed at 1.36V and 1.16 V respectively, due to the oxidation and the reduction of catechol groups by the reversible two-electron/two-proton reaction ($2e^-/2H^+$) [ACS Sustainable Chem. Eng. 2020, 8, 17933]. Ragone plot of the device is presented in Figure 14d. Specific energy of 37 Wh $kg^{-1}$ was obtained at a charge/discharge rate of 0.05 A g-1. Figures 14e and f present the self-discharge and the leakage current studies of the Zn-ion battery. Leakage current of 0.002 mA $cm^{-2}$ was observed when the cell was charged with constant voltage of 1.5 V for 24h. Self-discharge was measured by charging the cell up to a voltage of 1.5 V for 24 h and then measuring the open circuit voltage for 5 days and it was observed that the cell could retain 73 % of the voltage after 5 days. Figure 14g and h represent the cycle performance of the cell at a charge/discharge rate of 1 A $g^{-1}$. The zinc-ion battery showed good cycling performance with almost 49 % capacity retention after 11000 cycles. It is observed that for almost 8000 cycles the cell maintains its capacity. Energy efficiency was between 65-75 % during the cycle performance and the shows almost more than 95 % of Coulombic efficiency.

Further the cell was subjected to temperature variation from 20 °C to lower temperature of -20 °C followed by bringing the cell back to 20 °C and heating to 30 °C and then again to 20 °C and is presented in Figure 14i. At each temperature galvanostatic charge/discharge was studied at 0.1, 0.5 and 1 A $g^{-1}$. 94 % of the capacity was retained after the cell was subjected to temperature cycles. 83, 67, 46 and 23 % of the capacity was retained at temperatures of 10, 0, -10 and -20 °C respectively.

In summary, Figure 14 shows: (a) CV of the Zn ion battery containing Zn negatrode, catechol modified lignin positrode and the buffered agarose hydrogel electrolyte with 1 M $Zn^{2+}$, (b) the peak current versus scan rate graph for both oxidation and reduction process, corresponding to the CV of Figure 14a, (c) the galvanostatic charge-discharge (GCD) plot of the zinc lignin battery at different currents, (d) Ragone plot of the zinc-ion battery, (e) self-discharge of the Zn-ion battery, (f) leakage current in the hydrogel electrolyte (g) discharge capacity and capacity retention shown by the Zn-ion battery at different cylces at a charge/discharge rate of 1 A $g^{-1}$, (h) is the Coulombic efficiency and energy efficiency of the device with

cycling the battery at a charge/discharge rate of 1 A $g^{-1}$, and (i) the temperature variation of the performance of the Zn ion battery containing hydrogel electrolyte.

## Claims

**1.** A method for manufacturing a hydrogel comprising the steps of:

- providing an agarose;
- providing an aqueous solution of a salt comprising $Zn^{2+}$, wherein the salt is selected from zinc methanesulfonate, zinc acetate, zinc chloride, or a combination thereof;
- combining the agarose and the aqueous solution to form a mixture; and
- forming a hydrogel from said mixture.

**2.** The method according to claim 1, wherein the concentration of agarose in the hydrogel is in the range of 1% to 6% by weight of the hydrogel, such as 2% to 5% by weight of the hydrogel, such as 2.5% to 4% by weight of the hydrogel, such as approximately 3% by weight of the hydrogel.

**3.** The method according to claim 1 or 2, wherein the concentration of $Zn^{2+}$ in the hydrogel is in the range of 0.1 to 5M, such as in the range of 0.25 to 5M, such as in the range of 0.25 to 4.5M, such as in the range of 0.25 to 4M, such as in the range of 0.25 to 2M, such as in the range of 0.5 to 2M, such as in the range of 0.8 to 1.7M.

**4.** The method according to any one of the preceding claims further comprising a step of:

- providing a second salt to the mixture, wherein the second salt is selected from the list consisting of lithium methanesulfonate, sodium methanesulfonate, potassium methanesulfonate, magnesium methanesulfonate, quarternary ammonium methanesulfonate, a sodium salt of 2-(N-morpholino)ethanesulfonic acid (MES), a potassium salt of 2-(N-morpholino)ethanesulfonic acid, and a zinc salt of poly(2-acrylamido-2-methyl-1-propanesulfonic acid (PAMPSA).

**5.** The method according to any one of the preceding the claims further comprising a step of:

- providing an additive to the mixture, such as an additive selected from glycerol, a pH buffer, a freezing agent, and a mechanical stabilizer.

**6.** The method according to any one of claims 1-5, wherein the step of forming a hydrogel further comprises a step of heating the mixture to a predetermined temperature, and a step of allowing the mixture to cool, thereby forming the hydrogel.

**7.** A hydrogel comprising

agarose in the range of 1% to 6% by weight of the hydrogel;
a salt comprising $Zn^{2+}$, wherein the concentration of $Zn^{2+}$ in the hydrogel is in the range of 0.1 to 5M;
wherein the salt is selected from zinc methanesulfonate, zinc acetate, zinc chloride, or a combination thereof.

**8.** The hydrogel according to claim 7, further comprising a second salt selected from the list consisting of lithium methanesulfonate, sodium methanesulfonate, potassium methanesulfonate, magnesium methanesulfonate, quarternary ammonium methanesulfonate, a sodium salt of 2-(N-morpholino)ethanesulfonic acid (MES), a potassium salt of 2-(N-morpholino)ethanesulfonic acid, and a zinc salt of poly(2-acrylamido-2-methyl-1-propanesulfonic acid (PAMPSA).

**9.** The hydrogel according to claim 7 or 8, further comprising an additive selected from the group consisting of a glycerol, a pH buffer, a freezing agent, and a mechanical stabilizer.

**10.** An electrolyte for use in an electrochemical storage device, the electrolyte comprising the hydrogel as defined in any one of claims 7-9.

**11.** An electrochemical storage device comprising a positive electrode, a negative electrode, and an electrolyte as defined

in claim 10 disposed between the positive electrode and the negative electrode.

**12.** The electrochemical storage device according to claim 11, wherein the negative electrode comprises Zn.

**13.** The electrochemical storage device according to claim 12, wherein the negative electrode further comprises a mixture of Zn particles and a particular source of carbon selected from the group consisting of activated carbon, carbon black, graphite, carbon nanotubes, exfoliated graphite (2D graphite), and carbon felt.

**14.** The electrochemical storage device according to claim 12 or 13, wherein the negative electrode further comprises a binder, such as a polytetrafluoroethylene or a polyolefin, such as a polyethylene.

**15.** The electrochemical storage device according to any one of claims 11-14, wherein the positive electrode further comprises a second particular source of carbon selected from the group consisting of activated carbon, carbon black, graphite, carbon nanotubes, exfoliated graphite (2D graphite), and carbon felt.

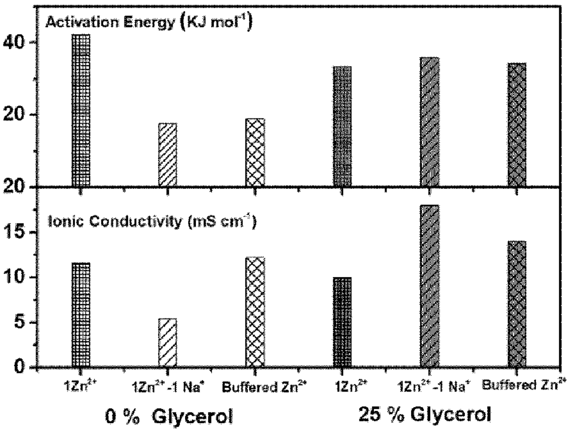


Fig. 1a

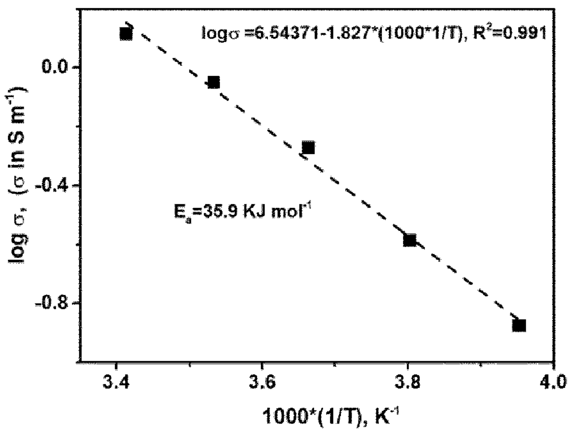


Fig. 1b

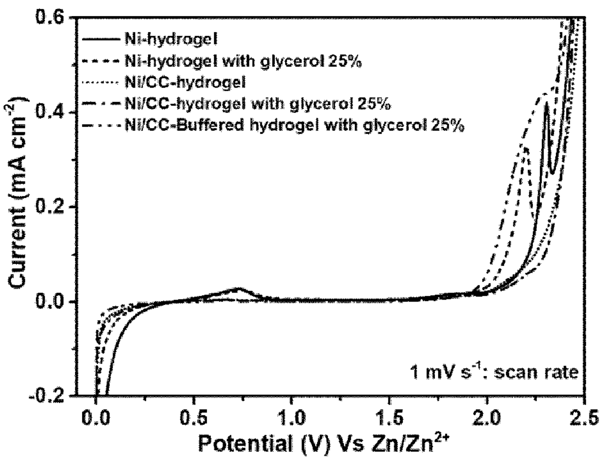


Fig. 2a

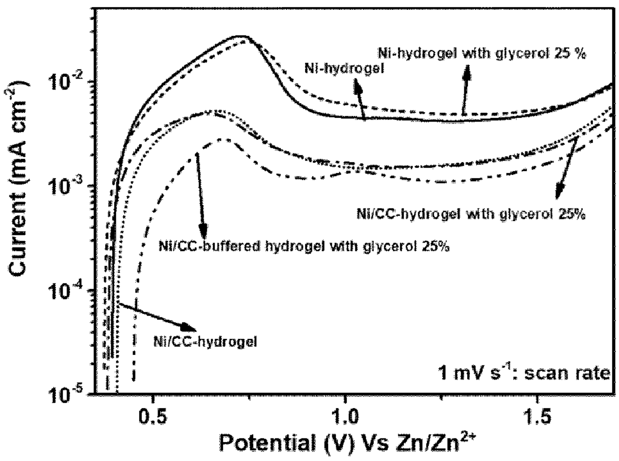


Fig. 2b

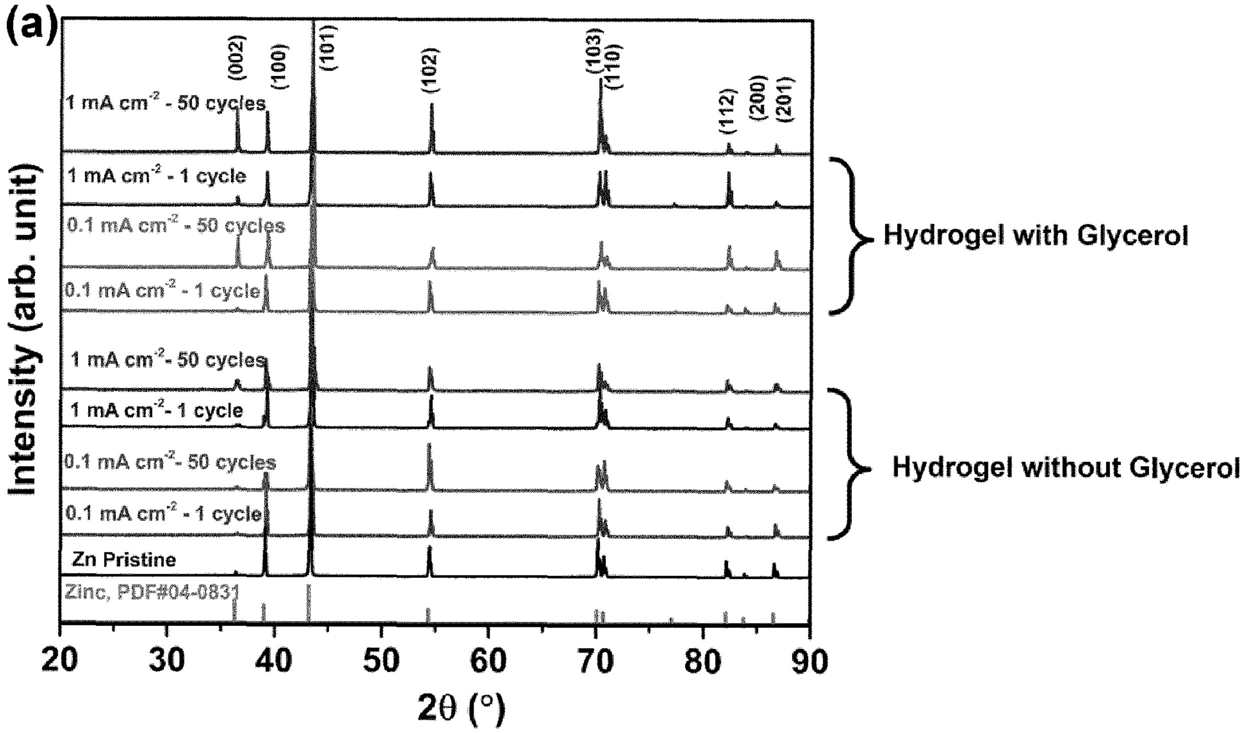
(a)
Intensity (arb. unit)
2θ (°)
(002)
(100)
(101)
(102)
(103)
(110)
(112)
(200)
(201)
1 mA cm-2 - 50 cycles
1 mA cm-2 - 1 cycle
0.1 mA cm-2 - 50 cycles
0.1 mA cm-2 - 1 cycle
1 mA cm-2- 50 cycles
1 mA cm-2- 1 cycle
0.1 mA cm-2- 50 cycles
0.1 mA cm-2 - 1 cycle
Zn Pristine
Zinc, PDF#04-0831
Hydrogel with Glycerol
Hydrogel without Glycerol
20
30
40
50
60
70
80
90

Fig. 3a

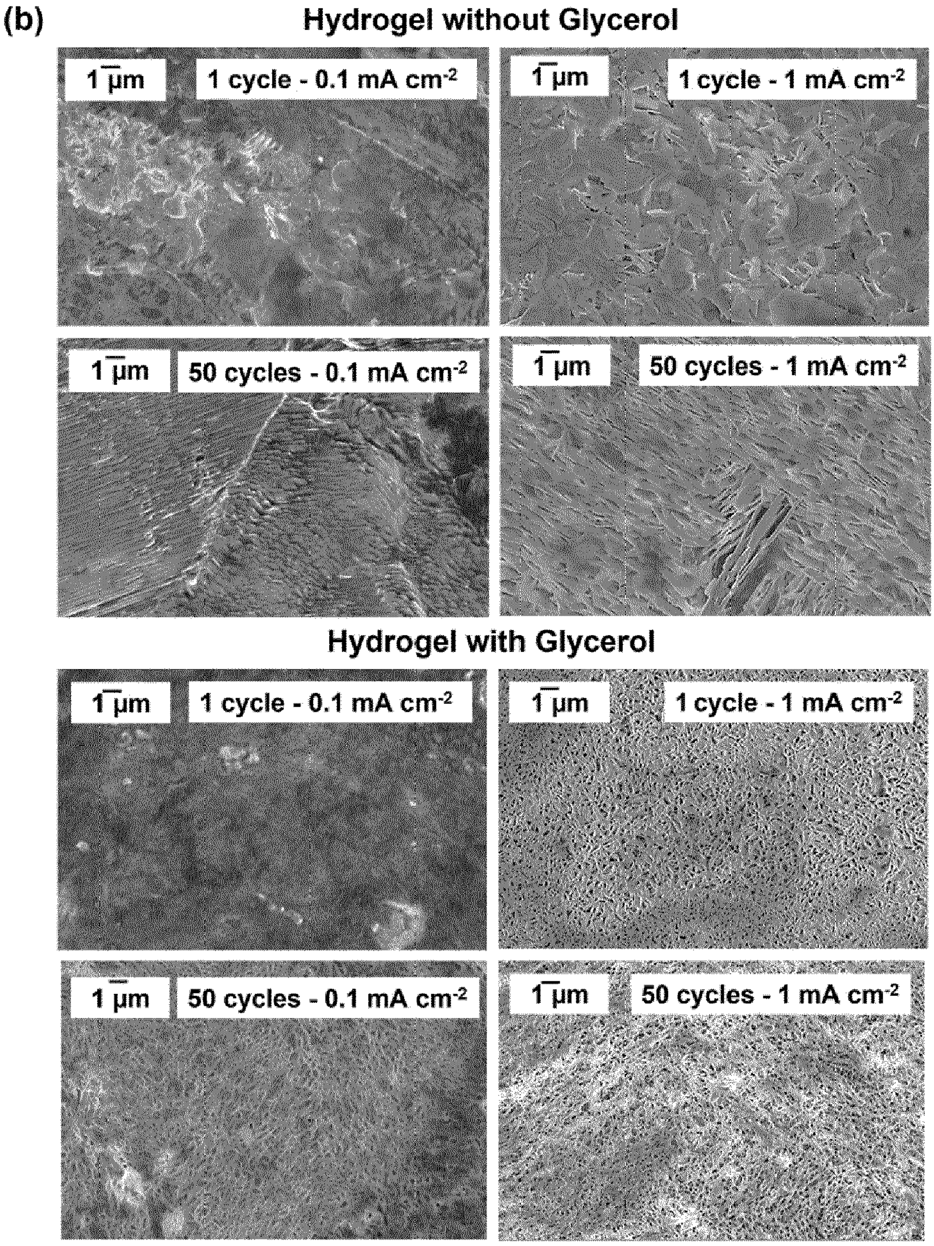
(b)
Hydrogel without Glycerol
1 µm
1 cycle - 0.1 mA cm-2
1 µm
1 cycle - 1 mA cm-2
1 µm
50 cycles - 0.1 mA cm-2
1 µm
50 cycles - 1 mA cm-2
Hydrogel with Glycerol
1 µm
1 cycle - 0.1 mA cm-2
1 µm
1 cycle - 1 mA cm-2
1 µm
50 cycles - 0.1 mA cm-2
1 µm
50 cycles - 1 mA cm-2

Fig. 3b

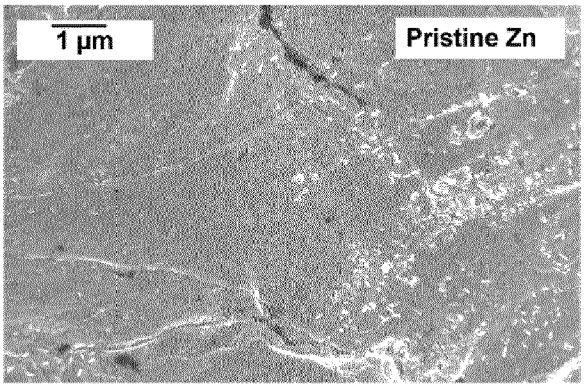


Fig. 3c

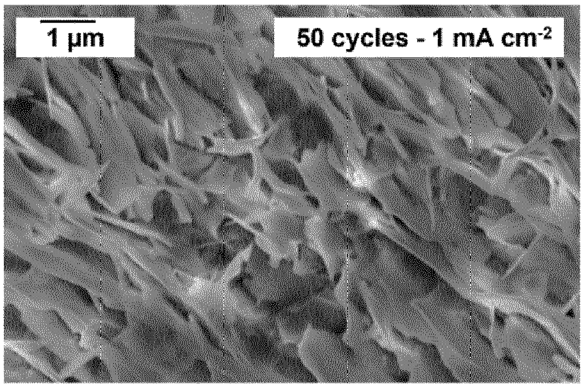


Fig. 3d

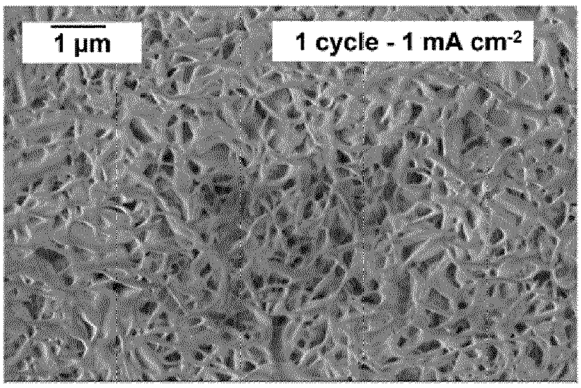


Fig. 3e

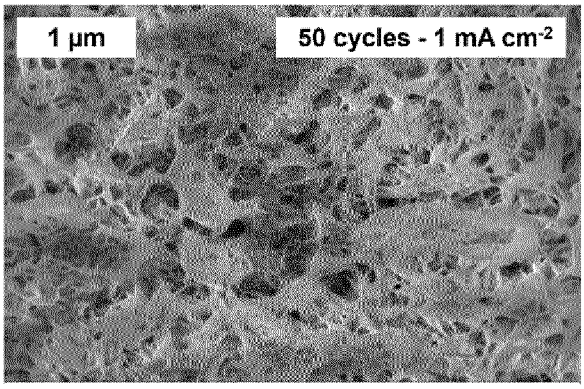


Fig. 3f

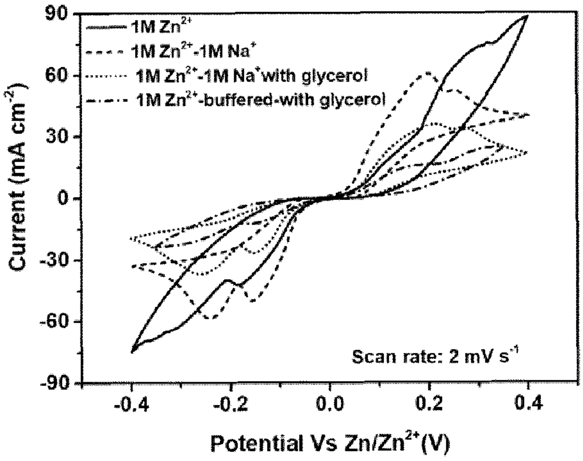


Fig. 4

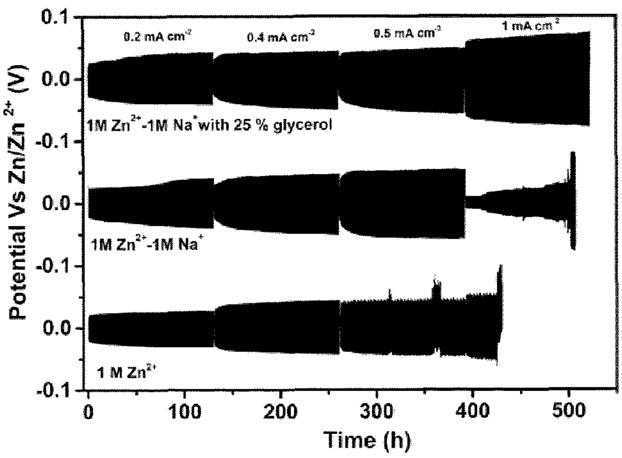


Fig. 5a

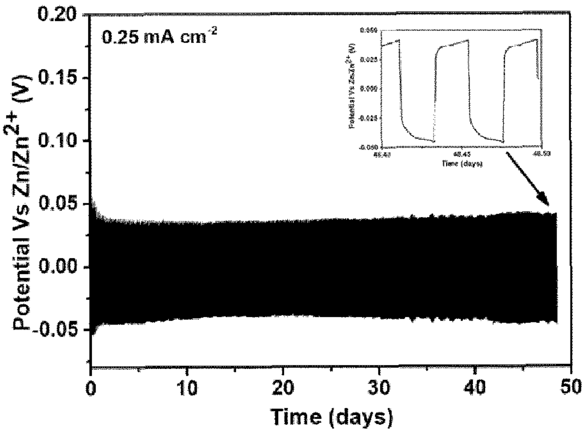


Fig. 5b

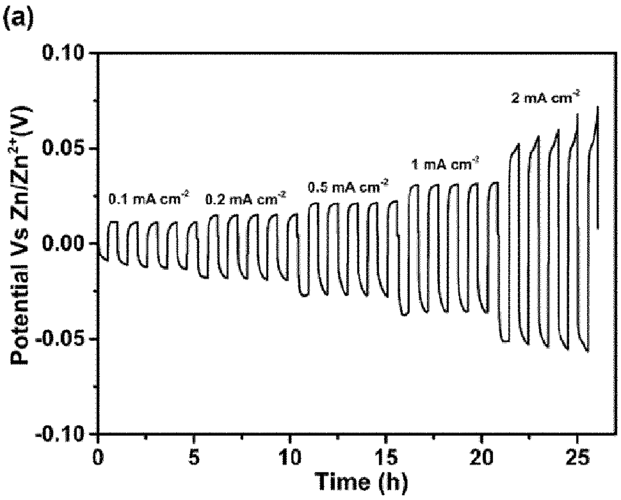
(a)
0.1 mA cm-2
0.2 mA cm-2
0.5 mA cm-2
1 mA cm-2
2 mA cm-2
Potential Vs Zn/Zn2+(V)
Time (h)

Fig. 6a

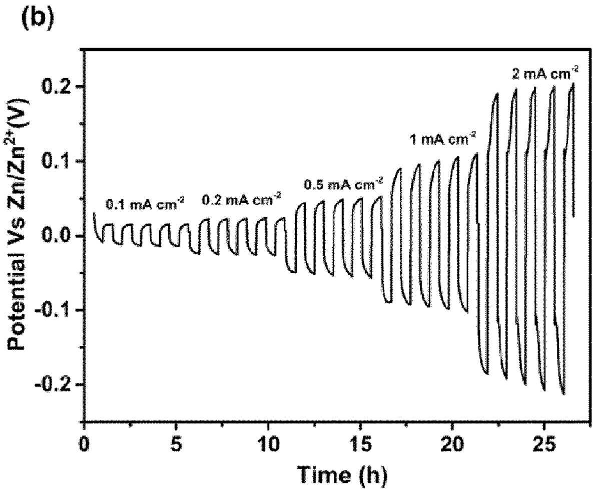
(b)
0.1 mA cm-2
0.2 mA cm-2
0.5 mA cm-2
1 mA cm-2
2 mA cm-2
Potential Vs Zn/Zn2+(V)
Time (h)

Fig. 6b

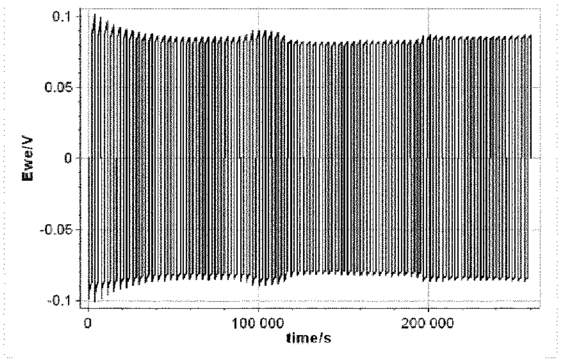


Fig. 7a

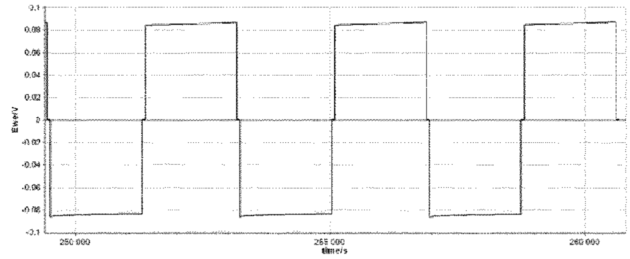

Fig. 7b

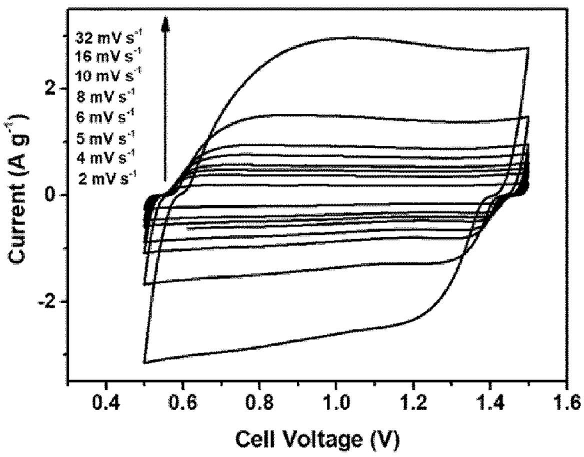


Fig. 8a

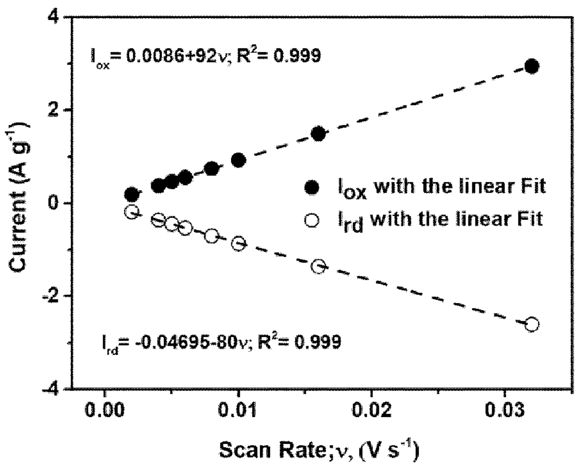


Fig. 8b

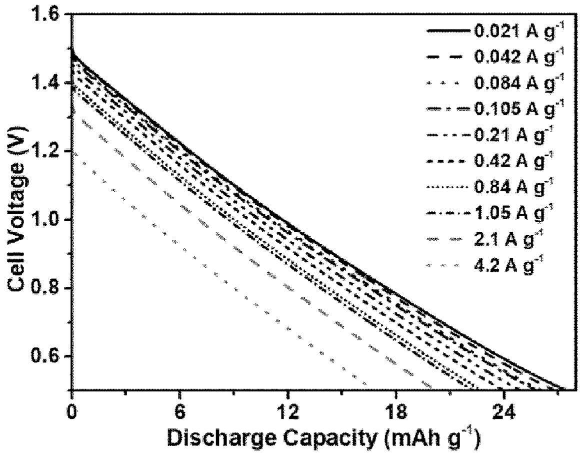


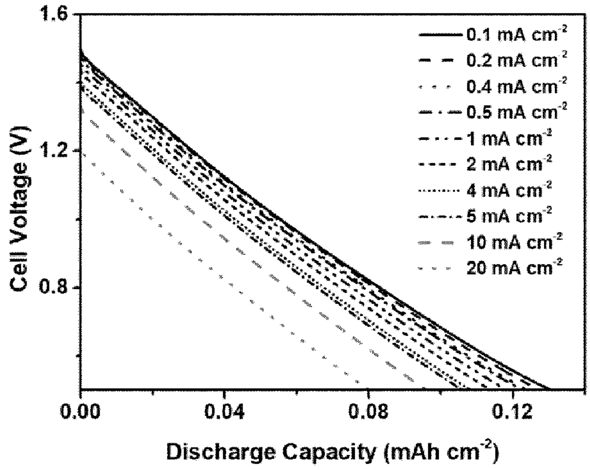


Fig. 9a

Fig. 9b

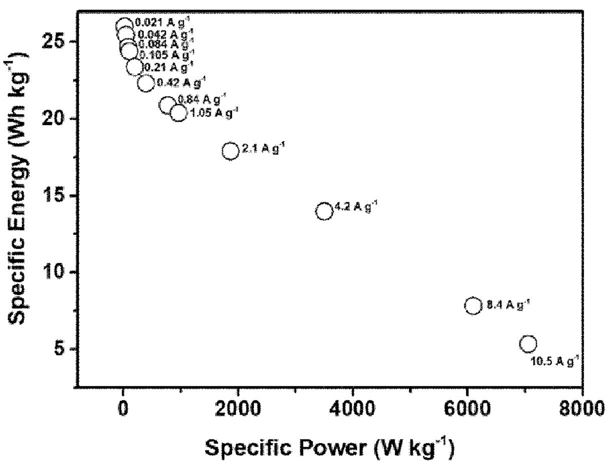


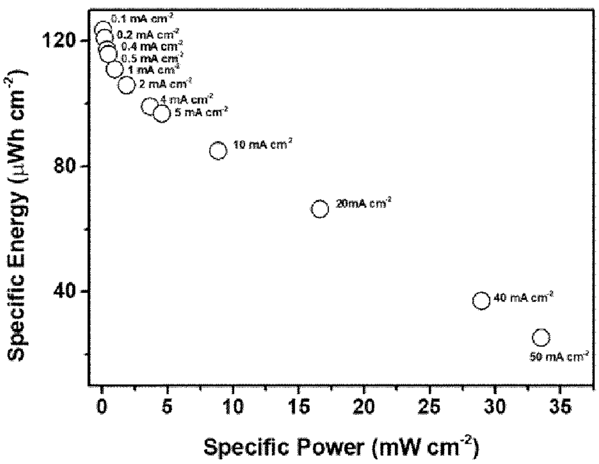


Fig. 10a

Fig. 10b

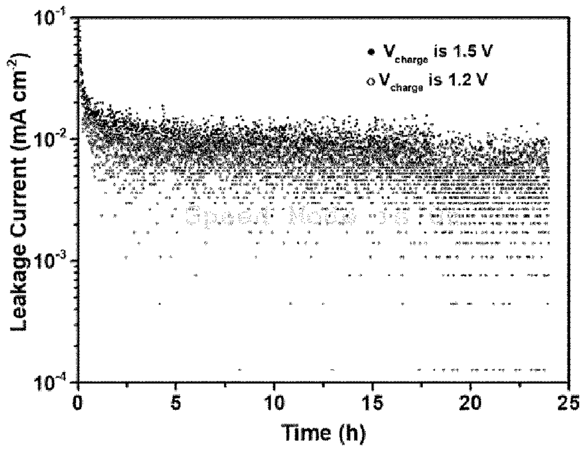


Fig. 11a

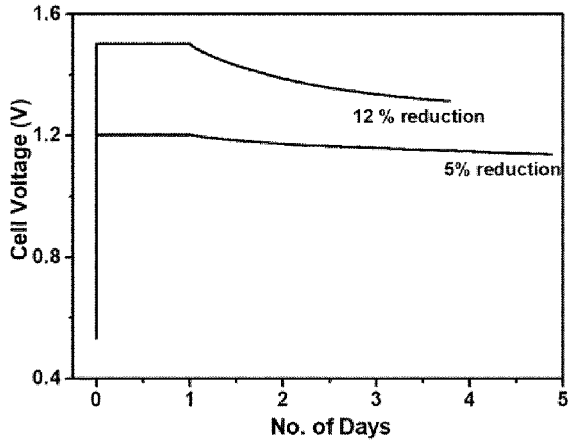


Fig. 11b

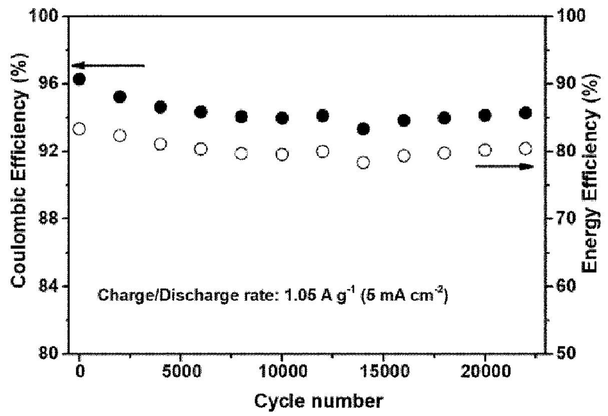


Fig. 12a

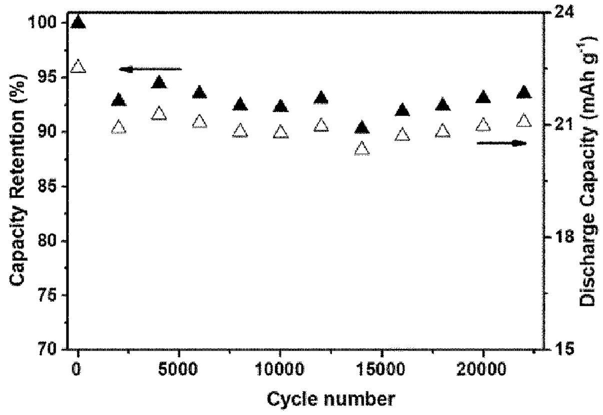


Fig. 12b

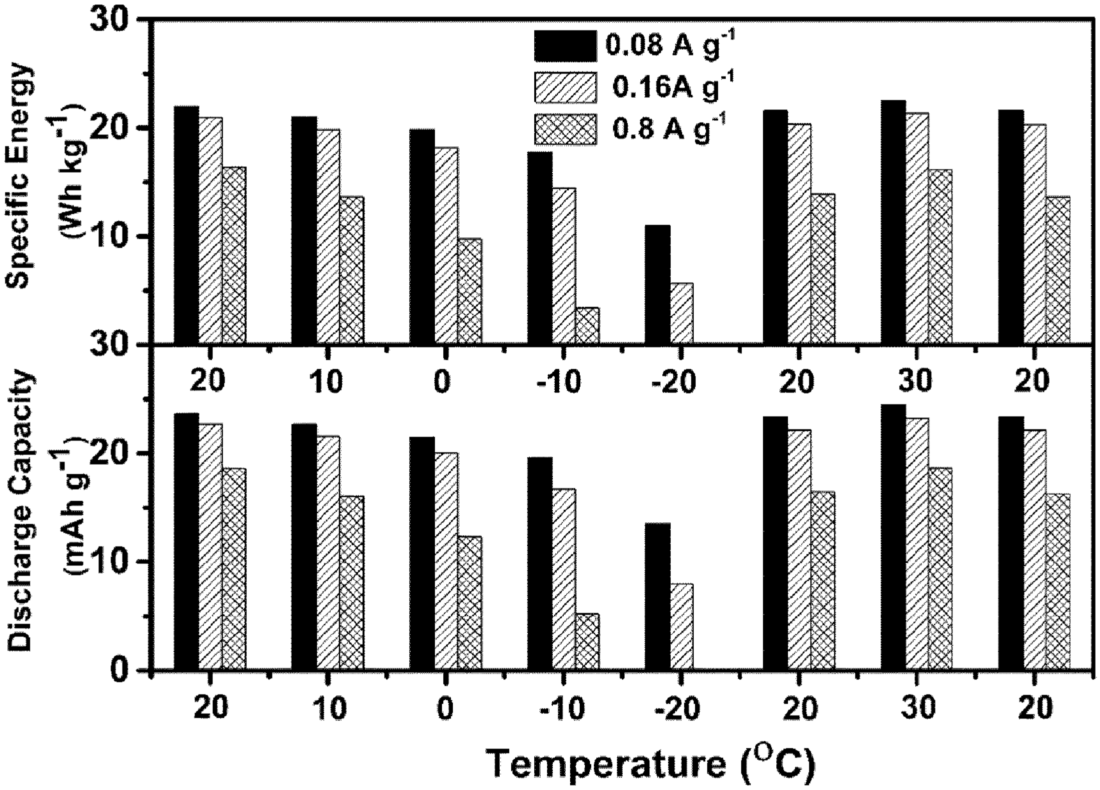


Fig. 13

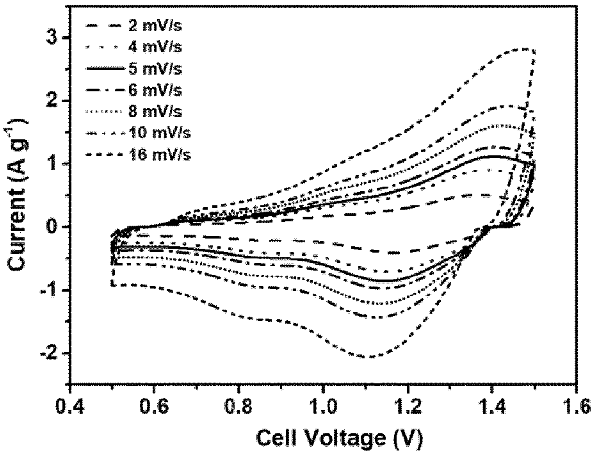


Fig. 14a

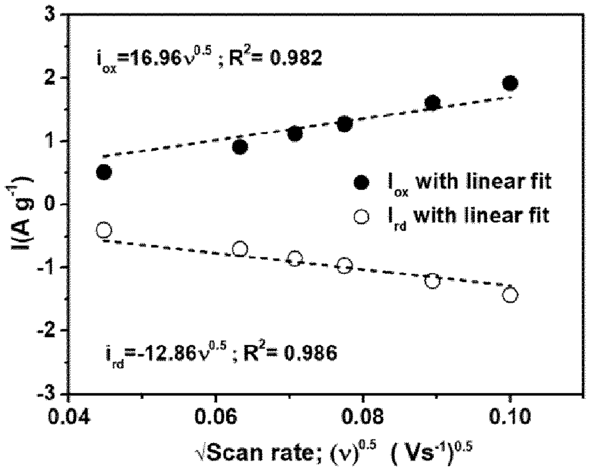


Fig. 14b

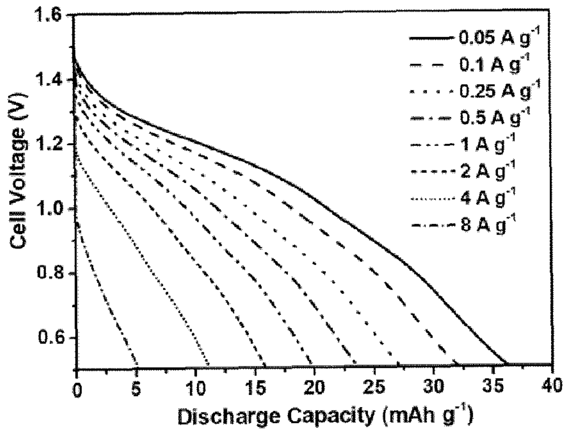


Fig. 14c

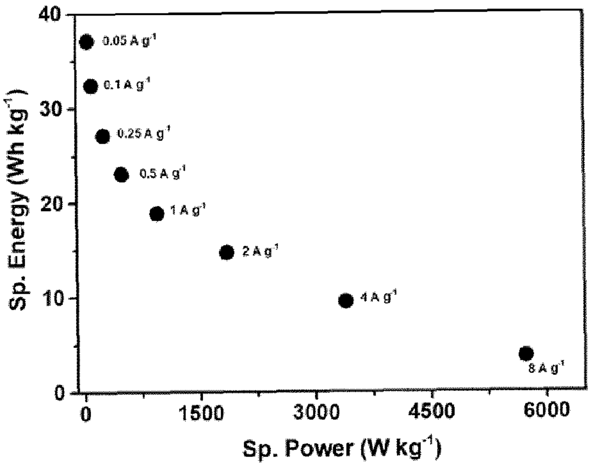


Fig. 14d

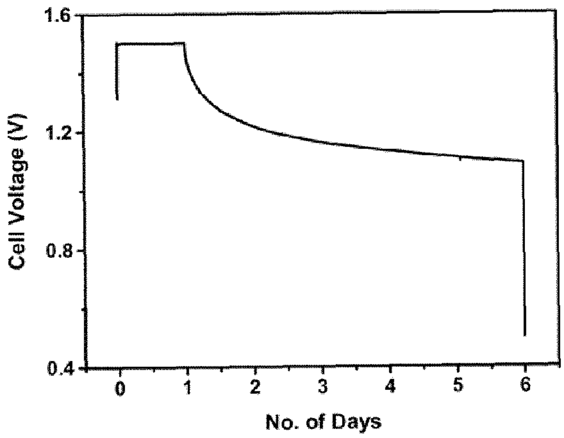


Fig. 14e

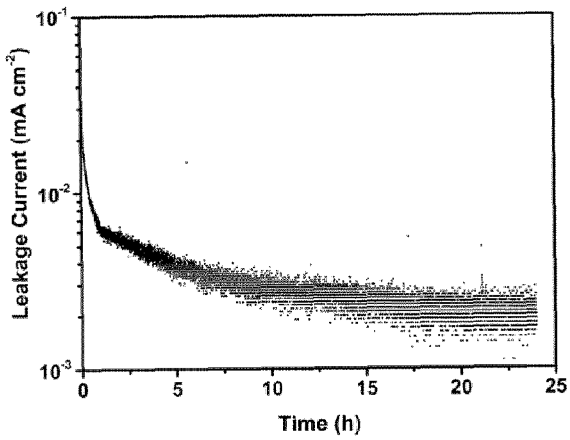


Fig. 14f

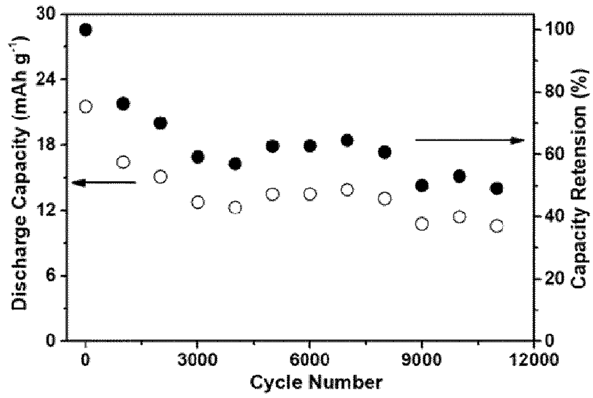


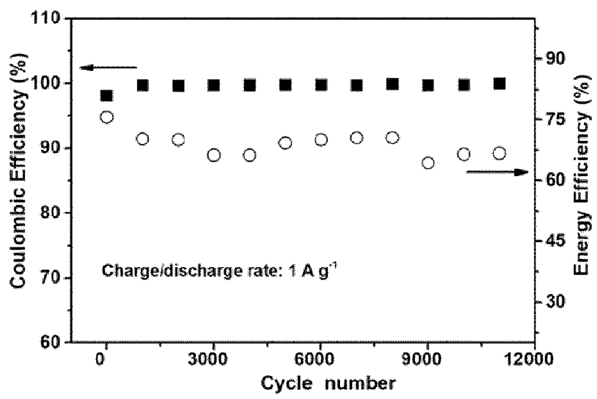


Fig. 14g

Fig. 14h

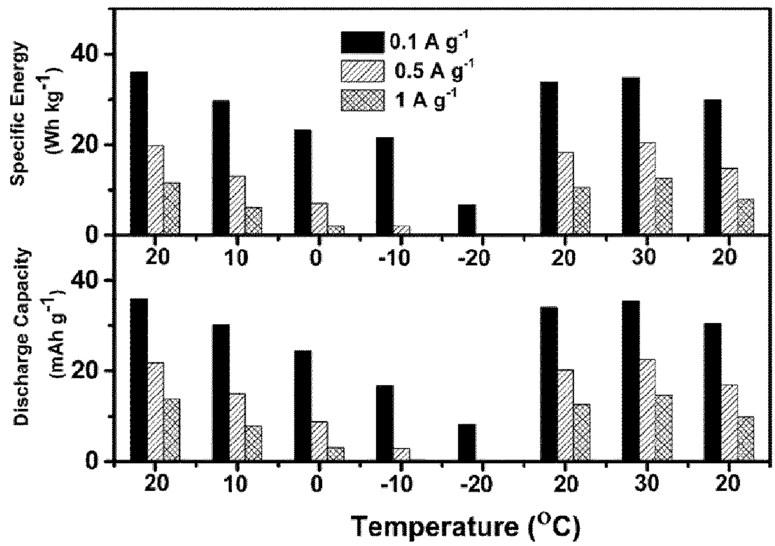


Fig. 14i

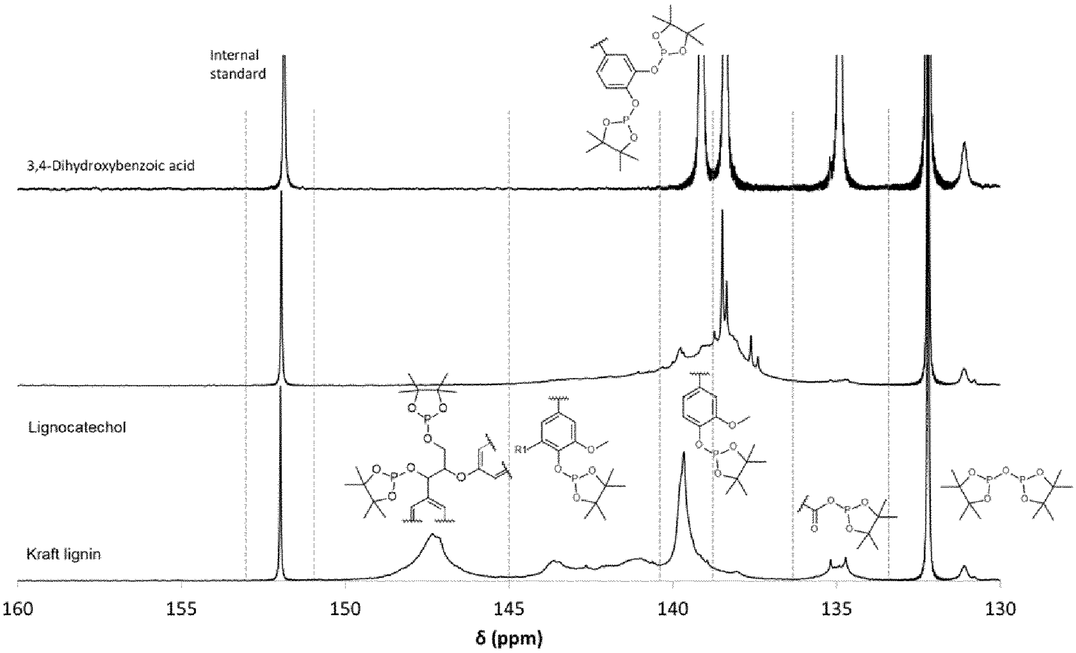
Internal
standard
3,4-Dihydroxybenzoic acid
Lignocatechol
Kraft lignin
160
155
150
145
140
135
130
δ (ppm)

Fig. 15

Europäisches Patentamt
European Patent Office
Office européen des brevets

# EUROPEAN SEARCH REPORT

Application Number
EP 23 18 0638

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | CN 114 350 095 A (UNIV CENTRAL SOUTH) 15 April 2022 (2022-04-15)<br>* abstract *<br>* claims 1-7 *<br>* Summary of the invention *<br>----- | 1<br>2-15 | INV.<br>H01M4/00 |
| X<br><br>Y | CHAN CHEUK YING ET AL: "Recent advances of hydrogel electrolytes in flexible energy storage devices", JOURNAL OF MATERIALS CHEMISTRY A, vol. 9, no. 4, 1 January 2021 (2021-01-01), pages 2043-2069, XP055970978, GB<br>ISSN: 2050-7488, DOI: 10.1039/D0TA09500A<br>* abstract *<br>* tables 1-9 *<br>* figures 1-13 *<br>----- | 1<br><br>2-15 | |

| TECHNICAL FIELDS SEARCHED (IPC) |
|---|
| H01M |

The present search report has been drawn up for all claims

| Place of search | Date of completion of the search | Examiner |
|---|---|---|
| Munich | 20 November 2023 | Stachowiak, Olaf |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 23 18 0638

This annex lists the patent family members relating to the patent documents cited in the above-mentioned European search report. The members are as contained in the European Patent Office EDP file on
The European Patent Office is in no way liable for these particulars which are merely given for the purpose of information.

20-11-2023

| Patent document cited in search report | Publication date | Patent family member(s) | Publication date |
|---|---|---|---|
| CN 114350095 A | 15-04-2022 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 19155073
- EP 3691000 A1


### Non-patent literature cited in the description


- *Sustainable Energy Fuels*, 2020, vol. 4, 3363-3369
- *Appl. Phys. A*, 2015, vol. 119, 387-396
- *Sol. Energy Mater. Sol. Cells*, 2009, vol. 93 (8), 1167
- *Electrochim. Acta*, 2007, vol. 53 (4), 1648-1654
- *Electrochim. Acta*, 2010, vol. 55 (4), 1455-1459
- *Solid State Ion.*, 1997, vol. 94, 35
- *Acta*, 2010, vol. 55 (4), 1455-1459
- *Opt. Mater.*, 2012, vol. 35 (2), 187-195
- *Opt. Mater.*, 2010, vol. 32 (6), 719-722
- *Solid State Ion.*, 2010, vol. 181 (13-14), 586-591
- *ACS Appl. Mater. Interfaces.*, vol. 9, 18691-18698
- *J. Electroanal. Chem.*, vol. 663, 98-107
- *J. Ind. Eng. Chem.*, vol. 26, 107-115, https://doi.org/10.3389/fenrg.2020.599009
- **A. GRANATA** ; **D. S. ARGYROPOULOS**. *J. Agric. Food Chem.*, 1995, vol. 43, 1538-1544
- *ACS Sustainable Chem. Eng.*, 2020, vol. 8, 17933